(19) Europäisches Patentamt / European Patent Office / Office européen des brevets

(11) EP 4 578 536 A1

(12) # EUROPEAN PATENT APPLICATION

published in accordance with Art. 153(4) EPC

(43) Date of publication:
**02.07.2025 Bulletin 2025/27**

(21) Application number: **23857275.4**

(22) Date of filing: **17.08.2023**

(51) International Patent Classification (IPC):
***B01D 69/02*** (2006.01) ***B01D 69/00*** (2006.01)
***B01D 69/08*** (2006.01) ***B01D 71/40*** (2006.01)
***B01D 71/44*** (2006.01) ***B01D 71/68*** (2006.01)
***B01D 71/80*** (2006.01)

(52) Cooperative Patent Classification (CPC):
**B01D 69/00; B01D 69/02; B01D 69/08; B01D 71/40; B01D 71/44; B01D 71/68; B01D 71/80; C08J 9/28; C08L 39/06; C08L 81/06**

(86) International application number:
**PCT/JP2023/029694**

(87) International publication number:
**WO 2024/043163 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 JP 2022133452**

(71) Applicant: **Toyobo Co., Ltd.**
**Kita-ku**
**Osaka-shi, Osaka 530-0001 (JP)**

(72) Inventors:
- **SHIMAZU, Jumpei**
  **Otsu-shi, Shiga 520-0292 (JP)**
- **YAMAMURA, Yasufumi**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) ## POROUS MEMBRANE AND PURIFICATION METHOD

(57) Provided is a porous membrane comprising a negatively-charged polymer, wherein the porous membrane is structurally non-uniform in a thickness direction, having a first surface that is less dense and a second surface that is more dense, the porous membrane has a permeation rate for permeation of gold colloids having an average particle size of 10 nm from the first surface to the second surface of 5% or more, the porous membrane does not allow permeation of gold colloids having an average particle size of 30 nm from the first surface to the second surface, and a ratio of a thickness of a trap layer to a thickness of the porous membrane is 10% or more, where the trap layer is a layer that traps gold colloids having an average particle size of 20 nm at the time when the gold colloids having an average particle size of 20 nm are made to permeate across the porous membrane from the first surface toward the second surface.

FIG.4

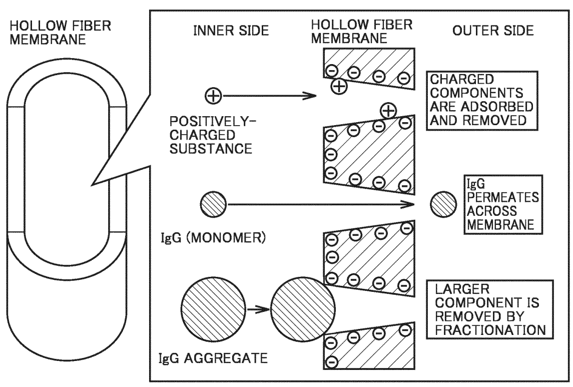


EP 4 578 536 A1

**Description**

TECHNICAL FIELD

The present invention relates to a porous membrane and a purification method.

BACKGROUND ART

At the time of producing antibody pharmaceuticals, for example, in a step to remove foreign matter and the like from cultured cells to purify antibodies (such as IgG), a cation-exchange membrane is used for adsorbing and removing positively-charged substances contained in host cell proteins (HCPs) and the like.

For adsorbing positively-charged substances such as proteins, the cation-exchange membrane needs to be negatively charged. As a cation-exchange membrane of this type, "Mustang S" from Pall Corporation and "Sartobind S" from Sartorius Stedim Biotech S.A. are available, for example.

As a negatively-charged porous membrane (a cation-exchange membrane) of this type, the inventors of the present invention developed a porous membrane usable in blood separation and the like that contains a negatively-charged polymer and the like.

PTL 1 (Japanese Patent No. 3651682) discloses an ion-exchange membrane made of a sulfonated polyarylene ether copolymer.

CITATION LIST

PATENT LITERATURE

PTL 1: Japanese Patent No. 3651682

SUMMARY OF INVENTION

TECHNICAL PROBLEM

There is a demand for a porous membrane of the above-mentioned type containing a negatively-charged polymer (a cation-exchange membrane), that is, at the time of antibody purification and the like with the use of the porous membrane, capable of not only adsorbing and removing positively-charged substances and the like in HCPs, but also removing IgG aggregates by fractionation while allowing permeation of non-aggregated IgG monomers to enable recovering IgG monomers, as illustrated in Fig. 4.

However, a porous membrane with this function is susceptible to over-time clogging of the porous membrane by various substances contained in cells. Accordingly, there is a need for a porous membrane that can be used in a continuous and stable manner with less clogging by various substances in treatment-target liquid.

Hence, the present invention aims at providing a porous membrane containing a negatively-charged polymer and the like, that is, at the time of purification of antibody pharmaceuticals and the like with the use of the porous membrane, capable of simultaneously performing adsorptive removal of positively-charged substances and size-based fractionation/removal of IgG aggregates to enable recovery of IgG monomers at a high recovery rate, with less clogging of the porous membrane.

SOLUTION TO PROBLEM

(1) A porous membrane comprising a negatively-charged polymer, wherein

the porous membrane is structurally non-uniform in a thickness direction, having a first surface that is less dense and a second surface that is more dense,
the porous membrane has a permeation rate for permeation of gold colloids having an average particle size of 10 nm from the first surface to the second surface of 5% or more,
the porous membrane does not allow permeation of gold colloids having an average particle size of 30 nm from the first surface to the second surface, and
a ratio of a thickness of a trap layer to a thickness of the porous membrane is 10% or more, where the trap layer is a layer that traps gold colloids having an average particle size of 20 nm at the time when the gold colloids having an

average particle size of 20 nm are made to permeate across the porous membrane from the first surface toward the second surface.

(2) The porous membrane according to (1), wherein the porous membrane further comprises a hydrophobic polymer and a hydrophilic polymer.
(3) The porous membrane according to (2), wherein the hydrophobic polymer is at least one of polysulfone and polyethersulfone.
(4) The porous membrane according to (2) or (3), wherein the hydrophilic polymer is at least one of polyvinylpyrrolidone and vinylpyrrolidone-vinyl acetate copolymer.
(5) The porous membrane according to any one of (1) to (4), wherein

the negatively-charged polymer contains a hydrophobic segment repeating unit represented by a formula (1) below and a hydrophilic segment repeating unit represented by a formula (2) below as copolymerization components:

[Chem. 1]

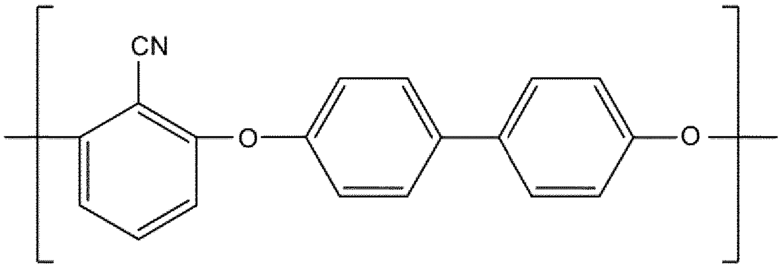

(1)

[Chem. 2]

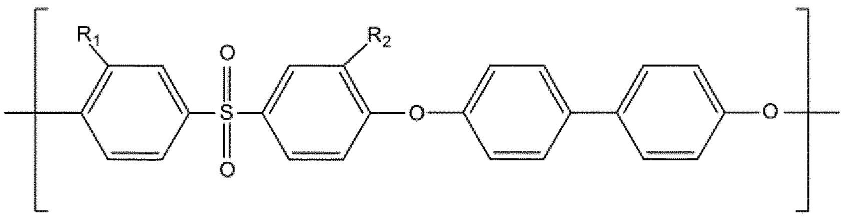

(2)

a compositional rate of the formula (1) (in mole) is from 0.50 to 0.65, a compositional rate of the formula (2) (in mole) is from 0.35 to 0.50, a sum of the compositional rate of the formula (1) (in mole) and the compositional rate of the formula (2) (in mole) is 1.00, each of $R_1$ and $R_2$ represents "$-SO_3M$", and M represents a metallic element.

(6) The porous membrane according to any one of (1) to (5), in a form of hollow fiber membrane that is less dense on an inner surface side and more dense on an outer surface side.
(7) The porous membrane according to any one of (1) to (6), for cation-exchange purification.
(8) A purification method using the porous membrane according to any one of (1) to (7).

ADVANTAGEOUS EFFECTS OF INVENTION

The present invention makes it possible to provide a porous membrane containing a negatively-charged polymer and the like, that is, at the time of purification of antibody pharmaceuticals and the like with the use of the porous membrane, capable of simultaneously performing adsorptive removal of positively-charged substances and size-based fractionation/removal of IgG aggregates to enable recovery of IgG monomers at a high recovery rate, with less clogging of the porous membrane.

BRIEF DESCRIPTION OF DRAWINGS

Fig. 1 is a schematic view for explaining an example of a method of producing a porous membrane.

Fig. 2 is a schematic view for explaining depth filtration.

Fig. 3 is a schematic view for explaining surface filtration (screen filtration).

Fig. 4 is a schematic view for explaining the function of a porous membrane according to an embodiment.

Fig. 5 is a graph showing the amount of lysozyme adsorption per volume of the porous membranes according to Comparative Example 1, Example 1, and the like.

Fig. 6 gives graphs showing the relationship between the filtration time and the total filtration volume per area, for the porous membranes according to Comparative Example 1 and Example 1.

Fig. 7 is a schematic view for explaining dead-end filtration in respective measurement methods.

Fig. 8 gives SEM images of cross sections of the porous membrane according to Example 1. (a) is a cross section of the porous membrane, (b) is a close-up image of a first surface (an inner surface), and (c) is a close-up image of a second surface (an outer surface).

Fig. 9 gives SEM images of cross sections of the porous membrane according to Comparative Example 1. (a) is a cross section of the porous membrane, (b) is a close-up image of a first surface (an inner surface), and (c) is a close-up image of a second surface (an outer surface).

Fig. 10 is an image of a cross section of a hollow fiber membrane, captured with a microscope after filtration of 20-nm gold colloid dispersion. (a) is an image captured for Comparative Example 1, (b) is an image captured for Example 1, and (c) is a cross section of the hollow fiber membrane according to Example 1 captured after filtration was performed in the opposite direction (in the direction from outside toward inside).

Fig. 11 is a schematic view of a loop-type mini-module.

Fig. 12 is a conceptual view of dead-end filtration using the loop-type mini-module illustrated in Fig. 11.

Fig. 13 is a graph showing the relationship between the total filtration amount and the lysozyme concentration ratio in a lysozyme adsorption experiment.

## DESCRIPTION OF EMBODIMENTS

In the following, a description will be given of embodiments of the present invention, but the scope of the present invention is not limited to these embodiments.

### <Hollow Fiber Membrane>

### [Material of Hollow Fiber Membrane]

A hollow fiber membrane according to the present embodiment contains a hydrophobic polymer, a negatively-charged polymer, and a hydrophilic polymer.

### (Hydrophobic Polymer)

Examples of the hydrophobic polymer include polysulfone-based polymers such as polysulfone and polyethersulfone, cellulose-based polymers such as cellulose acetate and cellulose derivatives, polyolefin-based polymers such as polyethylene, and the like. Polyethersulfone is a compound that contains a structural unit represented by a formula (3) below.

[Chem. 3]

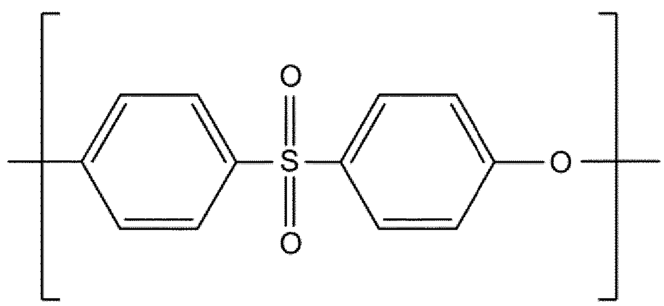

(3)

Specific examples of the polyethersulfone include Ultrason (registered trademark) E2020P and E6020P manufactured by BASF, as well as SUMIKAEXCEL (registered trademark) 3600P, 4100P, 4800P, 5200P, and 7600P manufactured by Sumitomo Chemical, and preferable are E6020P, 4800P, and 5200P. These may be used singly or in

combination.

(Negatively-Charged Polymer)

The negatively-charged polymer may be an ionomer that includes at least one of polystyrene sulfonic acid, poly(trifluorostyrene) sulfonic acid, polyvinylphosphonic acid, polyvinylcarboxylic acid, and polyvinylsulfonic acid components; an aromatic polymer that includes at least one of polysulfone, polyethersulfone, polyphenylene oxide, polyphenylene sulfide, polyphenylene sulfide sulfone, polyparaphenylene, polyarylene-based polymer, polyphenyl quinoxaline, polyarylketone, polyether ketone, polybenzoxazole, polybenzothiazole, polyimide, and the like, to which at least one of a sulfonic group, a phosphonic group, a carboxyl group, and a derivative thereof is introduced; or the like. Among these, polyarylene ether-based compounds containing a sulfonic group are preferably used, such as polysulfone-, polyethersulfone-, polyphenylene oxide-, polyphenylene sulfide-, polyphenylene sulfide sulfone-, or polyether ketone-based polymers.

The sulfonated polyarylene ether copolymer is a compound that contains a hydrophobic segment repeating unit represented by a formula (1) below and a hydrophilic segment repeating unit represented by a formula (2) below.

[Chem. 4]

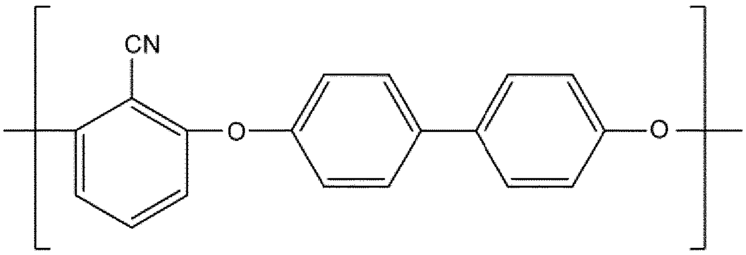

(1)

[Chem. 5]

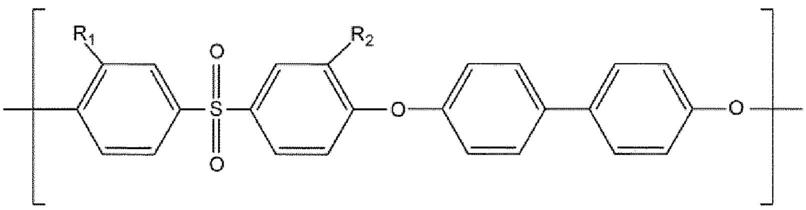

(2)

The compositional rate of the formula (1) (in mole) is from 0.50 to 0.65; the compositional rate of the formula (2) (in mole) is from 0.35 to 0.50; the sum of the compositional rate of the formula (1) (in mole) and the compositional rate of the formula (2) (in mole) is 1.00; $R_1$ and $R_2$ independently represent "$-SO_3M$" or "$-SO_3H$"; and M represents a metallic element.

The above-mentioned sulfonated polyarylene ether copolymer may be any of a random copolymer, a block copolymer, an alternating copolymer, and the like.

M (a metallic element) is not particularly limited, and examples thereof include sodium, potassium, lithium, and the like.

In the above-mentioned sulfonated polyarylene ether copolymer, it is more preferable that the compositional rate of the formula (1) (in mole) be from 0.50 to 0.60 and the compositional rate of the formula (2) (in mole) be from 0.40 to 0.50, and it is more preferable that each of $R_1$ and $R_2$ in the formula (2) be "$-SO_3Na$" or "$-SO_3K$".

It should be noted that the sulfonated polyarylene ether copolymer is a material that does not change much during a long-term use of the membrane.

The above-mentioned sulfonated polyarylene ether copolymer can be obtained by a conventionally known method and the like. For example, 2,6-dichlorobenzonitrile, 3,3'-disulfo-4,4'-dichlorodiphenylsulfone metal salt, and 4,4'-biphenol can be made to react with each other in the presence of a basic compound, to be polymerized by an aromatic nucleophilic substitution reaction, and thereby a copolymer composed of a hydrophobic segment represented by the formula (1) and a hydrophilic segment represented by the formula (2) can be obtained.

The polymerization can be caused to occur at a temperature within the range of 0 to 350°C, and, preferably, the temperature is from 50 to 250°C. At below 0°C, the reaction tends not to proceed sufficiently, and at above 350°C, degradation of the polymer tends to begin.

The reaction can be made to occur in the absence of solvent, but preferably it is made to occur in a solvent. Examples of the solvent that can be used include N-methyl-2-pyrrolidone, N,N-dimethylacetamide, N,N-dimethylformamide, dimethyl sulfoxide, diphenyl sulfone, sulfolane, and the like; however, these examples are not restrictive and any solvent that is stable in an aromatic nucleophilic substitution reaction may be used.

Examples of the basic compound include sodium hydroxide, potassium hydroxide, sodium carbonate, potassium carbonate, sodium hydrogen carbonate, potassium hydrogen carbonate, and the like; however, these examples are not restrictive and those that can transform an aromatic diol into an active phenoxide structure may be used.

In an aromatic nucleophilic substitution reaction, water can be produced as a byproduct. In that case, toluene and/or the like may be made to coexist in the reaction system in addition to and independently from the polymerization solvent to remove water as an azeotrope, out of the system. As the method for removing water out of the system, use of a water-absorbing material such as a molecular sieve may also be adopted.

In the case when the aromatic nucleophilic substitution reaction is made to occur in a solvent, it is preferable that the monomers be added in such a manner that a resulting polymer concentration is to be from 5 to 50 mass%. When it is below 5 mass%, the degree of polymerization tends not to increase. When it is above 50 mass%, the viscosity of the reaction system tends to become too high to perform posttreatment of the reaction product with ease.

After the completion of the polymerization reaction, the solvent is evaporated and removed from the reaction solution, followed by rinsing the remaining product as needed, to obtain a desired polymer (a sulfonated polyarylene ether copolymer). Alternatively, the reaction solution may be added to a solvent that does not dissolve the polymer very well, to make the polymer precipitated in solid form and collect the precipitate by filtration to obtain the polymer.

(Hydrophilic Polymer)

Examples of the hydrophilic polymer include polyvinyl alcohol, polyethylene glycol, vinylpyrrolidone-based polymers (such as polyvinylpyrrolidone and vinylpyrrolidone-vinyl acetate copolymers), polyacrylic acid, cellulose, methylcellulose, chitosan, and the like. The vinylpyrrolidone-based polymer is a polymer composed of monomers that contain at least N-vinylpyrrolidone.

Preferably, the vinylpyrrolidone-based polymer contains a structural unit represented by a formula (4) below.

[Chem. 6]

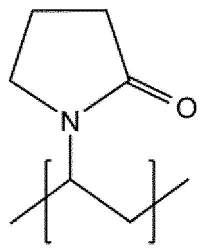

(4)

The vinylpyrrolidone-based polymer may be Kollidon (registered trademark) 30, 90, or Luvitec (registered trademark) K30, K80, K85, K90, VA64, all of which are commercially available from BASF.

Preferably, the ratio (Hydrophobic polymer)/(Negatively-charged polymer)/(Hydrophilic polymer) (in mass) in the entirety of the hollow fiber membrane is (60 to 90)/(7 to 22)/(3 to 18).

[Structure, Etc. of Porous Membrane]

A porous membrane according to the present embodiment is structurally non-uniform in the thickness direction (namely, it has an asymmetric structure). Examples of a porous membrane having an asymmetric structure include porous membranes in which the density, porosity, cross-sectional aperture rate, average pore size, and/or the like varies in the thickness direction.

The porous membrane having an asymmetric structure according to the present embodiment may be in the form of a flat membrane or may be in the form of a hollow fiber membrane, and, preferably, it is structurally less dense on a first surface side of a cross section (a transverse section, a cross section in the thickness direction) and more dense on a second surface side thereof. The structure of the hollow fiber membrane may be either less dense on the inner surface side and more dense on the outer surface side (having a dense layer on the outer surface side), or more dense on the inner surface side (having a dense layer on the inner surface side) and less dense on the outer surface side, preferably less dense on the inner surface side and more dense on the outer surface side (having a dense layer on the outer surface side). In the present embodiment, filtration is preferably performed by passing the treatment-target liquid from the less dense

side (the first surface side) toward the more dense side (the second surface side).

In the porous membrane according to the present embodiment, the porous membrane has a permeation rate for permeation of gold colloids having an average particle size of 10 nm from the first surface (the inner surface) to the second surface (the outer surface) of 5% or more, preferably 80% or more, more preferably 90% or more, further preferably 95% or more.

Preferably, at the time of filtration, the porous membrane does not allow permeation of gold colloids having an average particle size of 30 nm from the first surface (the inner surface) to the second surface (the outer surface). The expression "does not allow permeation" means that the permeation rate is 10% or less, preferably 5% or less, more preferably 1% or less.

Further, the ratio of the thickness of a trap layer, which is a layer that traps gold colloids having an average particle size of 20 nm at the time when the gold colloids having an average particle size of 20 nm are made to permeate across the porous membrane from the first surface (the inner surface) toward the second surface (the outer surface), to the thickness of the porous membrane is 10% or more, preferably 20% or more, more preferably 30% or more.

The average particle size of gold colloids means the average particle size described in the written instructions of the product and the like.

Referring to Fig. 2, in cation exchange using a porous membrane 3, from the pushed side (the upper side in Fig. 2; the first surface side of the porous membrane (the inner surface side of a hollow fiber membrane)), antibodies (IgG) and the like in cell-containing culture medium pass across porous membrane 3 and become separated at the second surface side of the porous membrane (the outer surface side of a hollow fiber membrane) (the lower side in Fig. 2). Among the components of the cell-containing culture medium, smaller components 5 (such as IgG) tend to pass through the pores of the porous membrane; however, among components that are smaller than the substances (such as IgG aggregates, for example) trapped at the first surface side of the porous membrane (the inner surface side of a hollow fiber membrane) (see Fig. 4), larger components 4 can clog the pores of the porous membrane. Here, as seen in Fig. 2, in the case of filtration across porous membrane 3 having an asymmetric structure (depth filtration), larger components 4 disperse in the thickness direction of porous membrane 3 and trapped (clogging occurs sequentially in the membrane thickness direction). As a result, clogging tends not to occur.

In contrast, as seen in Fig. 3, in the case of filtration across porous membrane 3 that is structurally uniform in the thickness direction (surface filtration, screen filtration), larger components 4 tend to crowd and become deposited near the outermost surface on the pushed side of porous membrane 3 (the upper side in Fig. 3, the first surface side of the porous membrane (the inner surface side of a hollow fiber membrane)), and thereby clogging tends to occur.

In the case of a hollow fiber membrane, the inner diameter is preferably from 150 μm to 400 μm, more preferably from 200 μm to 350 μm.

The thickness of the porous membrane is preferably from 30 to 200 μm, more preferably from 40 to 100 μm. The membrane thickness can be calculated by "((Outer diameter)-(Inner diameter))/2".

In the case of a hollow fiber membrane, the hollow rate is preferably from 15 to 60%, more preferably from 20 to 50%. The hollow rate is the proportion of the area of hollow portions in a transverse section of the hollow fiber membrane, and it is represented by "(Cross-sectional area of hollow portions)/((Cross-sectional area of membrane portion)+(Cross-sectional area of hollow portions))×100 (%)". When the hollow rate falls within the above-mentioned range, filtration performance and strength to withstand filtration pressure can be both obtained.

The porous membrane according to the present embodiment preferably has a porosity from 70% to 95%, more preferably from 85% to 95%, further preferably from 90% to 95%. When the porosity is set at 70% or more, the IgG recovery rate can be enhanced. On the other hand, when the porosity is too high, the porous membrane may not have enough strength. With the porosity set within the above-mentioned range, filtration performance and strength to withstand filtration pressure can be both obtained. The porosity of the porous membrane can be calculated, as described below, from the mass of water at the time when the pore portions of the porous membrane are filled with water, as well as from the dry mass of the porous membrane.

(Purpose of use)

The porous according to the present embodiment can be used for cation-exchange purification (a purification method), for example. The porous membrane according to the present embodiment can be suitably used at the time of producing antibody pharmaceuticals, for example, in a step to remove foreign matter and the like from cell-containing culture medium to purify antibodies (such as IgG), for adsorbing and removing positively-charged substances contained in host cell proteins (HCPs) and the like. For this purpose of use, the clogging-reducing effect of the porous membrane according to the present embodiment is especially useful.

<Method of Producing Porous Membrane>

In the following, a description will be given of a method of producing the above-mentioned porous membrane, taking an embodiment of a hollow fiber membrane as an example.

The hollow fiber membrane according to the present embodiment can be produced by the production method described below, for example.

A method of producing the hollow fiber membrane according to the present embodiment includes a spinning step that involves discharging a spinning dope and an internal liquid through a double-tube nozzle via an air gap into a coagulation liquid, allowing the spinning dope to become coagulated in the coagulation liquid, and pulling out the coagulated spinning dope from the coagulation liquid to obtain a hollow fiber membrane.

The spinning dope contains a resin raw material containing polyethersulfone, a solvent, and a non-solvent.

The internal liquid contains water.

In the above-mentioned method of producing a hollow fiber membrane,

the total concentration of components of the internal liquid except water (an internal liquid concentration) is preferably from 70 to 90 mass%.

The temperature of the coagulation liquid is preferably from 40 to 60°C.

In addition, the air gap length (AG length) to be described below is preferably from 10 to 80 mm.

[Spinning Step]

Referring to Fig. 1, in the spinning step, a spinning dope 10a and an internal liquid 10b are discharged through a double-tube nozzle 11 via an air gap 20 into a coagulation liquid 21, allowing the spinning dope to become coagulated in coagulation liquid 21, and then the coagulated spinning dope is pulled out from coagulation liquid 21 to obtain a hollow fiber membrane 3. The pulling-out of the hollow fiber membrane, etc. is performed with the use of in-liquid guides 12, 13 and rollers 14, 15, 16, for example. After pulled out from coagulation liquid 21, hollow fiber membrane 3 is immersed in a water bath 22 and then taken up on a take-up apparatus 23, for example.

Nozzle 11 has a double-tube form, and comprises an outer tube, and an inner tube provided on the inner side of the outer tube. The spinning dope is discharged through the gap (a slit) between the outer tube and the inner tube, and the internal liquid is discharged from inside the inner tube. The inner diameter of the outer tube is preferably from 500 to 1500 μm, more preferably from 600 to 1200 μm. The outer diameter of the inner tube is preferably from 150 to 700 μm, more preferably from 150 to 600 μm. The outer diameter of the inner tube is preferably approximately the same as the inner diameter of the hollow fiber membrane.

The straight-line distance of air gap 20 (the distance between the tip of nozzle 11 and the liquid level of coagulation liquid 21), which is called an air gap length (AG length), is preferably from 10 to 100 mm, more preferably from 10 to 80 mm.

The hollow fiber membrane obtained by the spinning step may be further subjected to a step of rinsing with pure water (a water rinse step). In the water rinse step, water is made to flow preferably in the opposite direction to the movement of the hollow fiber membrane (a countercurrent), but alternatively, it may be made to flow in the same direction as the movement of the hollow fiber membrane (a parallel current).

(Spinning Dope)

Spinning dope 10a contains the above-mentioned resin raw material containing polyethersulfone, a sulfonated polyarylene ether copolymer, and polyvinylpyrrolidone, a solvent, and a non-solvent, for example.

The temperature of the spinning dope in nozzle 11 (the discharge temperature) is preferably from 40 to 80°C, more preferably from 50 to 70°C.

The concentration of polyethersulfone in the spinning dope is preferably from 10 to 30 mass%, more preferably from 10 to 25 mass%. When the concentration of polyethersulfone is too low, the strength of the hollow fiber membrane may become too low. On the other hand, when the concentration of polyethersulfone is too high, the viscosity of the spinning dope may become too high to perform spinning with ease.

The concentration of the vinylpyrrolidone-based polymer in the spinning dope is preferably from 0.5 to 20 mass%, more preferably from 1 to 15 mass%. When the concentration of the vinylpyrrolidone-based polymer is too low, during cation exchange, proteins and the like in the cell-containing culture medium tend to become deposited to cause clogging, which may accelerate over-time degradation of the performance. On the other hand, when the concentration of the vinylpyrrolidone-based polymer is too high, the viscosity of the spinning dope may become too high to perform spinning with ease.

The concentration of the negatively-charged polymer in the spinning dope is preferably from 1 to 5 mass%, more preferably from 2 to 5 mass%. When the concentration of the negatively-charged polymer is too low, during cation

exchange, adsorptive removal of positively-charged substances and the like from HCPs contained in the cell-containing culture medium may not proceed sufficiently and thereby undesired components can leak out. On the other hand, when the concentration of the negatively-charged polymer is too high, the viscosity of the spinning dope may become too high to perform spinning with ease.

The solvent is a liquid in which polyethersulfone is soluble. The solvent is preferably a polar solvent, preferably soluble in water. The polar solvent is preferably an aprotic polar solvent. Examples of the aprotic polar solvent include N-methylpyrrolidone (NMP), dimethylformamide (DMF), dimethylacetamide (DMA), dimethyl sulfoxide (DMSO), acetonitrile, and the like.

The non-solvent is a liquid (except water) in which polyethersulfone is insoluble. The non-solvent may be glycol ester, glycerol, and/or alcohol, for example, and it is preferably glycol ester. Examples of the glycol ester include ethylene glycol, triethylene glycol (TEG), polyethylene glycol (such as polyethylene glycol 200 and polyethylene glycol 400), propylene glycol, and the like.

In the spinning dope, the ratio of the mass of the solvent (S) to that of the non-solvent (NS) (the S/NS ratio) is preferably from 35/65 to 55/45, more preferably from 40/60 to 50/50. When the S/NS ratio of the spinning dope is too low, polyethersulfone is not dissolved stably, which may impair spinning stability and/or may make it impossible to obtain an asymmetric structure suitable for the purpose of use intended by the present invention. When the S/NS ratio is high, a hollow fiber membrane with an asymmetric structure may not be obtained and/or spinning stability may be impaired.

In addition to the solvent and the non-solvent, the spinning dope may further contain water.

At the time of mixing the resin raw material which is the material of the hollow fiber membrane, the solvent, and the non-solvent, the order to add the materials and the method for mixing them are not particularly limited.

(Internal Liquid)

The internal liquid contains water. The content rate of water in the internal liquid is preferably from 5 to 30 mass%, more preferably from 10 to 25 mass%.

In addition to water, the internal liquid may contain a solvent, a non-solvent, and/or the like. Examples of the non-solvent include ethylene glycol, triethylene glycol (TEG), polyethylene glycol 200 or 400, glycerol, propylene glycol, and the like. Examples of the solvent include N-methylpyrrolidone (NMP), dimethylacetamide, dimethylformamide, dimethyl sulfoxide, and the like.

When the internal liquid has a low content rate of water and a high content rate of the solvent, coagulation on the inner side of the hollow fiber membrane proceeds slowly and phase separation takes long, and, thereby, the inner side of the hollow fiber membrane becomes less dense. On the other hand, when the content rate of water is high and the content rate of the solvent is low, coagulation on the inner side of the hollow fiber membrane proceeds fast and phase separation does not take long, and, thereby, the inner side of the hollow fiber membrane becomes more dense.

For obtaining the hollow fiber membrane according to the present embodiment that is less dense on the inner side of the membrane, it is preferable to increase the concentration of the components, except water, contained in the internal liquid (such as the solvent and/or the non-solvent) (the internal liquid concentration). The internal liquid concentration is preferably from 70 to 95 mass%, more preferably from 75 to 90 mass%. The ratio of the mass of the solvent to that of the non-solvent in the internal liquid (solvent/non-solvent) is from 40/60 to 50/50, for example.

At the time of discharging spinning dope 10a and internal liquid 10b through double-tube nozzle 11, the temperature of the spinning dope may be set to be different from that of the internal liquid.

(Coagulation Liquid)

The coagulation liquid preferably contains a solvent and a non-solvent. Each of the solvent and the non-solvent may be either one type or a mixture of a plurality of types. When the content rate of the solvent is too high, coagulation on the outer side of the hollow fiber membrane proceeds slowly and phase separation takes long, and, thereby, the outer side of the hollow fiber membrane becomes less dense. On the other hand, when the content rate of water is high and the content rate of the solvent is too low, coagulation on the outer side of the hollow fiber membrane proceeds fast and phase separation does not take long, and, thereby, the outer side of the hollow fiber membrane becomes more dense. For obtaining the hollow fiber membrane according to the present embodiment that is more dense on the outer side of the membrane, the proportion of the sum of the solvent and the non-solvent in the coagulation liquid (the concentration of the coagulation liquid, the CB concentration) is preferably from 20 to 60 mass%, more preferably from 30 to 45 mass%. The ratio of the mass of the solvent to that of the non-solvent in the coagulation liquid (solvent/non-solvent) is from 40/60 to 50/50, for example.

Moreover, the temperature of the coagulation liquid also greatly affects the coagulation time of the membrane. When the temperature of the coagulation liquid is high, coagulation on the outer side of the hollow fiber membrane proceeds slowly and phase separation takes long, and, thereby, the outer side of the hollow fiber membrane becomes less

dense. On the other hand, when the temperature of the coagulation liquid is low, coagulation on the outer side of the hollow fiber membrane proceeds fast and phase separation does not take long, and, thereby, the outer side of the hollow fiber membrane becomes more dense. For obtaining the hollow fiber membrane according to the present embodiment that is more dense on the outer side of the membrane, the temperature of the coagulation liquid is preferably from 30 to 70°C, more preferably from 40 to 60°C.

When the speed of coagulation on the outer side of the hollow fiber membrane attributable to the concentration and the temperature of the coagulation liquid is faster than the speed of coagulation on the inner side of the hollow fiber membrane attributable to the internal liquid concentration, the inner surface side becomes less dense and the outer surface side becomes more dense. When the speed of coagulation on the outer side of the membrane relative to that on the inner side is too fast, the outer side of the membrane becomes too dense to allow permeation of useful components such as IgG. In contrast, when it is slow, the pore size on the outer side of the membrane becomes large and thereby allows permeation of foreign matter that should be trapped, and if it is too slow, the inner surface side becomes more dense and the outer surface side becomes less dense, and, thereby, the liquid cannot enter into the membrane from the inner surface side of the membrane. Therefore, for obtaining the hollow fiber membrane according to the present embodiment having an asymmetric structure where the inner surface side is less dense and the outer surface side is more dense and that allows permeation of useful components and traps foreign matter, the balance in concentration and temperature between the internal liquid and the coagulation liquid is important.

[Examples]

In the following, a more detailed description will be given of the present invention by way of Examples, but these Examples are not intended to limit the scope of the present invention.

(Preparation of Sulfonated Polyarylene Ether Copolymer)

3,3'-disulfo-4,4'-dichlorodiphenyl sulfone disodium salt (hereinafter expressed as S-DCDPS), 2,6-dichlorobenzonitrile (hereinafter expressed as DCBN), 4,4'-biphenol (hereinafter expressed as BP), potassium carbonate, and NMP were weighed into a four-necked flask to achieve S-DCDPS 11.6 mass%, DCBN 5.0 mass%, BP 9.6 mass%, potassium carbonate 8.2 mass%, and NMP 65.6 mass%, followed by adding a molecular sieve thereto and passing nitrogen therethrough. After the resultant was stirred at 150°C for 50 minutes, the reaction temperature was raised to the range of 195°C to 200°C and the reaction was allowed to proceed until the viscosity of the system rose sufficiently. Subsequently, the resultant was left to cool, and after cooling, the sedimented molecular sieve was removed and the polymer was precipitated in water. The polymer thus obtained was rinsed in boiling water for 1 hour, followed by careful rinsing in pure water to completely remove the remaining potassium carbonate. Subsequently, the polymer from which potassium carbonate had been removed was dried, and thereby a sulfonated polyarylene ether copolymer was obtained. The SPN thus obtained was a copolymer of the above-mentioned formula (1) and the above-mentioned formula (2), where the component molar rate of (1) was 0.56 and the component molar rate of (2) was 0.44.

[Example 1]

Basically in the same manner as the method of producing a hollow fiber membrane described in EMBODIMENTS, hollow fiber membranes according to Example 1 were produced.

In the spinning step, a spinning dope obtained in the below manner, together with an internal liquid, was discharged through a warmed tube-in-orifice nozzle, passed through a dry section (air gap 20) that was shut off from the outside air by a spinning tube, coagulated in a coagulation bath, passed through a water bath, and wound on a skeiner (take-up apparatus 23) at a predetermined spinning rate. The specific conditions and the like are described below.

<Preparation of Spinning Dope>

16.0 mass% of polyethersulfone (PES, SUMIKAEXCEL 4800 manufactured by Sumitomo Chemical), 4.0 mass% of the above-mentioned sulfonated polyarylene ether copolymer (SPN, manufactured by TOYOBO), 2.0 mass% of polyvinylpyrrolidone K-90 (PVP, manufactured by Nippon Shokubai), 46.8 mass% of N-methyl-2-pyrrolidone (NMP, manufactured by Mitsubishi Chemical), and 31.2 mass% of triethylene glycol (TEG, manufactured by Mitsubishi Chemical) were mixed together, and heated and dissolved into uniformity, to prepare a spinning dope.

<Composition of Internal Liquid>

A mixed liquid of NMP (solvent) and TEG (non-solvent) in a mass ratio (S/NS ratio) of NMP/TEG=60/40 was

mixed with reverse osmosis (RO) water to prepare an internal liquid. The total concentration of the solvent and the non-solvent in the internal liquid (the internal liquid concentration) was 80 mass%, and RO water was 20 mass%.

<Composition of Coagulation Liquid>

A mixed liquid of NMP (solvent) and TEG (non-solvent) in a mass ratio (S/NS ratio) of NMP/TEG=60/40 was mixed with reverse osmosis (RO) water to prepare a coagulation liquid. The total concentration of the solvent and the non-solvent in the coagulation liquid (the CB concentration) was 40 mass%, and RO water was 60 mass%.

<Conditions in Spinning Step>

Spinning dope discharge temperature (the set temperature): 60°C
Air gap length (AG length): 40 mm
Pull-out speed (spinning rate): 20 m/min

<Conditions in Water Rinse Step>

Flow in water tank (water bath): Countercurrent
Temperature: 45°C

A bundle of the hollow fiber membranes obtained by the above-mentioned steps was cut into a certain length, wrapped in gauze, and then rinsed with RO water at 80°C and immersed in an aqueous glycerol solution with a glycerol concentration of 80 mass%. The aqueous glycerol solution was prepared by using glycerol manufactured by NOF. Subsequently, the resultant was taken out from the aqueous glycerol solution and dried with a hot-air dryer at 60°C. In this way, dried hollow fiber membranes were obtained.

Each hollow fiber membrane thus obtained had a dense layer on the outer surface side, an inner diameter of 265 μm, an outer diameter of 365 μm, and a thickness (membrane thickness) of 50 μm.

[Example 2]

In Example 2, the composition ratio of the spinning dope (PES, PVP (K-90), SPN, NMP, and TEG) was changed as specified in Table 1. Except for this, the same manner as in Example 1 was adopted to produce hollow fiber membranes according to Example 2. In Table 1, "%" means "mass%".

[Example 3]

In Example 3, the temperature of the coagulation liquid was changed as specified in Table 1. Except for this, the same conditions as in Example 1 were adopted to produce hollow fiber membranes according to Example 3.

[Comparative Example 1]

In Comparative Example 1, the internal liquid concentration, the temperature of the coagulation liquid, the AG length, and the spinning speed were changed as specified in Table 1. Except for these changes, the same manner as in Example 1 was adopted to produce hollow fiber membranes according to Comparative Example 1.

[Comparative Example 2]

In Comparative Example 2, the composition of the spinning dope was changed as specified in Table 1. Except for this, the same manner as in Comparative Example 1 was adopted to obtain hollow fiber membranes according to Comparative Example 2.

[Comparative Example 3]

In Comparative Example 3, the composition of the spinning dope, the internal liquid concentration, the S/NS ratio

of the internal liquid, the AG length, the temperature of the coagulation liquid, the CB concentration, and the S/NS ratio of the coagulation liquid were changed as specified in Table 1. Except for these changes, the same manner as in Comparative Example 1 was adopted to obtain hollow fiber membranes according to Comparative Example 3.

[Comparative Example 4]

In Comparative Example 4, the same manner as in Example 1 was adopted to obtain hollow fiber membranes.

[Table 1]

| | Spinning dope | | | | | Internal liquid | | AG length | Coagulation liquid | | | Spinning rate |
|---|---|---|---|---|---|---|---|---|---|---|---|---|
| | PES | PVP | Negatively-charged polymer | NMP | TEG | Internal liquid concentration | S/NS ratio | | Temperature | Concentration | S/NS ratio | |
| | (%) | (%) | (%) | (%) | (%) | (%) | - | (mm) | (°C) | (%) | - | (m/min) |
| Ex. 1 | 16 | 2 | 4 | 46.8 | 31.2 | 80 | 60/40 | 40 | 50 | 40 | 60/40 | 20 |
| Ex. 2 | 16 | 3 | 4 | 46.2 | 30.8 | | | | | | | |
| Ex. 3 | 16 | 2 | 4 | 46.8 | 31.2 | | | | 55 | | | |
| Comp. Ex. 1 | 16 | 2 | 4 | 46.8 | 31.2 | 20 | 60/40 | 200 | 74 | 40 | 60/40 | 37 |
| Comp. Ex. 2 | 16 | 3 | 4 | 46.2 | 30.8 | | | | | | | |
| Comp. Ex. 3 | 28.5 | 9 | 0 | 28.1 | 34.4 | 95 | 45/55 | 10 | 29 | 62 | 45/55 | 20 |
| Comp. Ex. 4 | 16 | 2 | 4 | 46.8 | 31.2 | 80 | 60/40 | 40 | 50 | 40 | 60/40 | 20 |

For each of Examples and Comparative Examples described above, measurement was carried out for the following items. Results of the measurement are given in Table 2. For the cells in Table 2 without numerical values, measurement was not carried out.

[Inner Diameter, Outer Diameter, and Membrane Thickness of Hollow Fiber Membrane]

The inner diameter, outer diameter, and membrane thickness of the hollow fiber membranes according to Examples and Comparative Examples were measured by the methods described below.

A proper number of the hollow fiber membranes are drawn through a hole (diameter, 3 mm) that is made in the center of a slide glass, in a way that the hollow fiber membranes will not slide out of the hole, followed by cutting the hollow fiber membranes with a razor along the top face and the bottom face of the slide glass to obtain hollow fiber membrane cross section samples. For the hollow fiber membrane cross section samples thus obtained, with the use of a projector (Nikon PROFILE PROJECTOR V-12), the inner diameter and the outer diameter of the hollow fiber membranes are measured.

More specifically, for one hollow fiber membrane cross section, the dimensions of the outer surface of the hollow fiber membrane in both the X-X direction and the Y-Y direction (two mutually-orthogonal directions in the cross section) were measured, and the arithmetic mean of them was defined as the outer diameter of the hollow fiber membrane cross section. Similarly, for one hollow fiber membrane cross section, the dimensions of the hollow portion in both the X-X direction and the Y-Y direction (two mutually-orthogonal directions in the cross section) were measured, and the arithmetic mean of them was defined as the inner diameter of the hollow fiber membrane cross section. This measurement was carried out for ten cross sections, and the average values were defined as the inner diameter and the outer diameter, respectively.

The membrane thickness (the average value) is calculated by "((Outer diameter)-(Inner diameter))/2", based on the results of measurement of the inner diameter and the inner diameter of the hollow fiber membranes (the average values).

[Porosity]

By the procedure described below, the porosity of the porous membranes was measured.

(1) The porous membrane bundle sufficiently immersed in pure water was centrifuged at a rotational speed of 900 rpm for 5 minutes, and thereby liquid was removed from the bundle.
(2) The mass (W) of the porous membranes from which liquid was removed was measured.
(3) The mass (P) of the porous membranes that were absolutely dried in a dryer was measured.
(4) The porosity (φ) was calculated by the equation below.

$$\varphi\ (\%) = W/(W + P/(\text{Polymer density})) \times 100$$

The polymer density in this calculation was the density of the polymer that was contained in the membranes at the highest content rate. For example, the density of polyethersulfone was 1.37 g/cm$^3$.

[SEM Image]

By the procedure described below, an SEM image of a cross section of the hollow fiber membrane was obtained.

(1) The hollow fiber membrane was lightly rinsed with water, and the sample was frozen in liquid nitrogen and cut.
(2) The sample thus obtained was fixed to a sample platform in such a manner that the cut surface could be examined, followed by sputtering for carbon deposition.
(3) The sample after carbon deposition was examined with a scanning electron microscope (S-2500 manufactured by Hitachi) at an accelerating voltage of 10 kV, and thereby an SEM image was obtained.

SEM images of Example 1 and Comparative Example 1 are given in Fig. 8 and Fig. 9, respectively. Fig. 8 shows that the hollow fiber membrane according to Example 1 has an asymmetric structure where the inner surface side is less dense and the outer surface side is more dense.

[Permeation Rate of Gold colloids]

Measurement of the permeation rate of 10-nm gold colloids (gold colloids having an average particle size of 10 nm) and 30-nm gold colloids (gold colloids having an average particle size of 30 nm) was carried out in the manner described below, which is described for the measurement of the hollow fiber membrane as an example.

<Preparation of Loop-Type Mini-Module>

A bundle of a plurality of hollow fiber membranes, which were cut into a length of about 40 cm, was bent in such a manner that the end portions were aligned side by side, and the end portions were inserted into a pipe (a sleeve) and hardened with a hotmelt resin. The bonded portion was cut off partially, and thereby a loop-type mini-module was obtained in which the hollow portion of each hollow fiber membrane was open (see Fig. 11). The number of the hollow fiber membranes was determined as appropriate.

<Preparation of Gold Colloid Dispersion>

6 mL of a 10-nm, 30-nm gold colloid uniform liquid (manufactured by BBI Solutions, gold colloid standard product) and 3 mL of a 2.0-mass% bovine serum albumin (manufactured by Nacalai Tesque, Albumin, Bovine Serum, F-V, pH5.2) aqueous solution were mixed together, and thereto, 3 mL of a 0.4-mass% glutathione (reduced type) aqueous solution (manufactured by Nacalai Tesque) was added.

<Gold Colloid Permeation Experiment>

The loop-type mini-module prepared in the above-described manner was used for the following.

(1) The gold colloid dispersion was subjected to dead-end filtration at a pressure of 1000 hPa, and the filtrate was sampled (see Fig. 12).
(2) The permeation rate of gold colloids was calculated in the below manner from measured values of absorbance (at a wavelength of 540 nm).

Permeation rate= Ratio of (Absorbance of gold colloid dispersion)/(Absorbance --> of filtrate)

[Thickness of 20-nm Gold Colloid Trap Layer]

By the procedure described below, a test liquid (20-nm gold colloid dispersion) was filtrated across the hollow fiber membrane in the direction from the inner side toward the outer side, and the thickness of a layer at which 20-nm gold colloids were trapped (a trap layer) was measured.

<Preparation of Gold Colloid Dispersion>

6 mL of a 20-nm gold colloid uniform liquid (manufactured by BBI Solutions, Gold Colloid) and 3 mL of a 2.0-mass% bovine serum albumin (manufactured by Nacalai Tesque, Albumin, Bovine Serum, F-V, pH5.2) aqueous solution were mixed together, and thereto, 3 mL of a 0.4-mass% glutathione (reduced type) aqueous solution (manufactured by Nacalai Tesque) was added.

<Gold Colloid Trapping Experiment>

(1) The test liquid (20-nm gold colloid dispersion) was subjected to dead-end filtration in the same manner as in the above-mentioned measurement of the permeation rate of gold colloids (see Fig. 7), and an image of a cross section of the hollow fiber membrane after filtration (a sample) was captured with a microscope. (Images of Comparative Example 1 and Example 1 are given in Fig. 10(a) and Fig. 10(b).)
(2) The captured image was binarized (WinROOF 2013), and the distance between the primary side (the inner surface of the hollow fiber membrane) and the position where gold colloids were trapped was measured. More specifically, in Fig. 10(b), the distance between the inner surface of the hollow fiber membrane and the position of the gold colloid trap layer indicated by the arrow was measured.

Table 2 also gives the ratio of the thickness of the trap layer to the thickness of the hollow fiber membrane.

It should be noted that Comparative Example 4 was carried out for the hollow fiber membrane according to Example 1, where 20-nm gold colloids were filtrated in the direction from the outer side of the hollow fiber membrane toward the inner side and the thickness of the trap layer was measured in the same manner as above. Fig. 10(c) gives an SEM image of a cross section of the hollow fiber membrane after filtration. As a result of the measurement, the thickness of the trap layer was 0, which indicates that when filtration was performed in the direction from the outer side of the hollow fiber membrane toward the inner side, 20-nm gold colloids did not enter into the hollow fiber membrane in the thickness direction.

[Cation-Exchange Volume]

The amount of cation exchange per volume of the porous membranes was measured in the manner described below, where the measurement was carried out for hollow fiber membranes as an example. The amount of cation exchange per volume of the porous membranes is an index of performance to remove negatively-charged substances.

More specifically, the measurement was carried out in the procedures of (1) to (8) below.

(1) Based on measured values, the density of the hollow fiber membranes (samples) was calculated by the following equation.

Density=(Dry weight)/((Membrane cross-sectional area)×Length×(Number of membranes))

(2) Ten samples (1 cm each) were immersed in 1-M HCl for 30 minutes.
(3) The samples were transferred into a suction bottle and suction-filtered.
(4) Until the suctioned liquid became neutral, suction filtration was continued while water was being poured to the samples.
(5) The samples were taken out and immersed in a 1-M NaCl solution.
(6) A phenolphthalein solution was added to the 1-M NaCl solution in which the samples were immersed, and titration was carried out with 0.01-M NaOH.
(7) Titration was ended when the phenolphthalein solution turned color.
(8) The cation-exchange volume was calculated by the equation below.

Cation-exchange volume=(Titration amount (mL))/[(Sample amount (0.1 g))/(Density (g/mL))]

[IgG Recovery Rate and IgG-Aggregates Trapping Rate]

By the procedure described below, the IgG recovery rate and the IgG-aggregates trapping rate of the hollow fiber membranes were measured.

<Preparation of Module>

A hollow fiber membrane bundle was inserted into a tubular vessel, and both ends were hardened with an adhesive agent. The end portions were cut off, and thereby a module that was open at both ends was obtained. The number of the hollow fiber membranes was determined as appropriate. At two positions on the round tubular face of the tubular vessel having a round tubular shape, ports were provided for allowing fluid perfusion both outside and inside the hollow fiber membranes.

<Calculation of Membrane Area>

The membrane area, A, of the module was determined by the equation below, based on the inner diameter of the hollow fiber membranes.

$$A=n\times\pi\times ID\times L$$

In the equation, n represents the number of the hollow fiber membranes in the module; $\pi$ represents the circular constant; ID represents the inner diameter [m] of the hollow fiber membranes; and L represents the effective length [m] of the hollow fiber membranes in the module.

<Calculation of Membrane Volume>

The membrane volume, V, [mL] of the module was determined by the equation below, based on the inner diameter and the outer diameter of the hollow fiber membranes.

$$V=n\times\pi\times\{(OD/2)^2-(ID/2)^2\}\times L$$

In the equation, n represents the number of the hollow fiber membranes in the module; $\pi$ represents the circular constant; ID represents the inner diameter [cm] of the hollow fiber membranes; OD represents the outer diameter [cm] of the hollow fiber membranes; and L represents the effective length [cm] of the hollow fiber membranes in the module.

<Preparation of Test Liquids>

(1) The following test liquids were prepared.

(i) For IgG recovery rate

Phosphate buffer was added to IVIG manufactured by Seracare to prepare a test liquid with 0.05% IVIG.

(ii) For IgG-aggregates trapping rate

HCl was added to the test liquid (i) prepared in the above-described manner, to lower the pH to 1.0 or less, and after a lapse of 5 hours, the pH was made to be neutral with NaOH to prepare a test liquid (ii).

<IgG Recovery, IgG-Aggregates Trapping Experiment>

(2) The test liquid was subjected to dead-end filtration with the use of the above-mentioned module (see Fig. 7), and the filtrate was sampled.
(3) The absorbance was measured for both the test liquid and the filtrate (wavelength, 280 nm).
(4) Multi-Sample Nanoparticle Size Measurement System (under the trade name of nano SAQLA, manufactured by Otsuka Electronics Co., Ltd.; analysis made by the Marquardt method, based on number distribution) was used to measure the particle size distribution of both the test liquid and the filtrate, to determine the relative frequency for a particle size below 50 nm and a particle size of 50 nm or more.
(5) The IgG recovery rate [%] and the IgG-aggregates trapping rate [%] were calculated by the equations below.

IgG recovery rate [%]=((Absorbance of filtrate)×(Relative frequency of filtrate for particle size below 50 nm))/((Absorbance of test liquid)×(Relative frequency of test liquid for particle size below 50 nm))× 100

IgG-aggregates trapping rate [%]=100-(((Absorbance of filtrate)×(Relative frequency of filtrate for particle size of 50 nm or more))/((Absorbance of test liquid)×(Relative frequency of test liquid for particle size of 50 nm or more)))×100

[Amount of Lysozyme Adsorption]

By the procedure described below, the amount of lysozyme adsorption per volume of the hollow fiber membranes was measured. The amount of lysozyme adsorption was defined as the amount of lysozyme adsorbed on the hollow fiber membranes up until 10% breakthrough.

(1) Dulbecco's Phosphate Buffered Saline Powder commercially available from FUJIFILM Wako Pure Chemical Corporation was dissolved in distilled water to make 500 mL in total, and thus a phosphate buffer with a concentration of 1 mass% was obtained. To this buffer, lysozyme (derived from egg white) commercially available from FUJIFILM Wako Pure Chemical Corporation was added to achieve a concentration of 0.22 mg/mL, for use as a test liquid.
(2) The above-mentioned module with six hollow fiber membranes was used, and the test liquid was passed though the hollow portions at a flow rate per unit membrane area of 700 mL/$m^2$ to carry out dead-end filtration. The filtrate was collected every 10 minutes after the start of the filtration, and for each fraction, the amount of filtrate $Z_n$ was measured. Here, n represents Fraction No., which is an ordinal number starting from 1 (which is for the first fraction).
(3) The absorbance of the test liquid and each fraction was measured at 280 nm, and referring to a calibration curve created in advance, the lysozyme concentration in both each fraction and the test liquid as well as the lysozyme

concentration ratio between each fraction and the test liquid, $Y_n$, were determined.

$$Y_n\text{=(Absorbance of fraction at 280 nm)/(Absorbance of test liquid at 280 nm)}$$

(4) A bar chart was created to show the relationship between the total filtration amount $W_u$ from the start of filtration to the completion of respective fraction collections and the lysozyme concentration ratio $Y_n$, which is given in Fig. 13.

$$W_n=Z_1+Z_2+\ldots+Z_n$$

(5) In the bar chart of Fig. 13, a straight line was drawn between the center of the top of one fraction and that of the next fraction, while another straight line was drawn to indicate the lysozyme concentration ratio of 0.1, and then the point where these two straight lines met each other was defined as a 10% breakthrough point; and the total filtration amount to this point, X, was determined.

(6) $W_u$ closest to X was defined as $W_m$, and by the equations below, A (the total amount of lysozyme contained in Fractions 1 to (m-1)), B (half the amount of lysozyme contained in Fraction m), and C (the approximate amount of lysozyme contained in filtrates at the total filtration amount from $(W_{mt}+W_{m-1})/2$ to X) were calculated.

$$A=(Z_1\times Y_1+Z_2\times Y_2+\ldots+Z_{m-1}\times Y_{m-1})\times\text{(Lysozyme concentration of test liquid)}$$

$$B=Z_m\times Y_m/2\times\text{(Lysozyme concentration of test liquid)}$$

$$C=(X-(W_m+W_{m-1})/2)\times(Y_m+0.1)/2\times\text{(Lysozyme concentration of test liquid)}$$

(7) The sum of A, B, and C was regarded as the total leak-out amount of lysozyme up until a total filtration amount of X.

$$\text{Total leak-out amount=A+B+C}$$

(8) The amount of lysozyme supplied up until a total filtration amount of X (the total supply amount) was calculated by the equation below.

$$\text{Total supply amount=X}\times\text{(Lysozyme concentration of test liquid)}$$

(9) The amount of lysozyme adsorbed on the hollow fiber membranes up until a total filtration amount X (the total adsorption amount) was calculated by the equation below.

$$\text{Total adsorption amount=(Total supply amount)-(Total leak-out amount)}$$

(10) The amount of lysozyme adsorption per unit volume of the hollow fiber membranes (the amount of lysozyme adsorption per volume) was determined by the equation below.

Amount of lysozyme adsorption per volume=(Total adsorption amount)/(Membrane volume)

In the evaluation, lysozyme was used as a typical positively-charged substance, and a high amount of lysozyme adsorption means a high adsorption capability for positively-charged substances.

Fig. 5 is a graph showing the amount of lysozyme adsorption per volume of the hollow fiber membranes according to Comparative Example 1, Example 1, and the like. Fig. 5 also shows results of measuring the amount of lysozyme adsorption for PES membranes (hollow fiber membranes made of polyethersulfone) and MustangS (flat membranes manufactured by Pall).

[Total Filtration Amount]

By the procedure described below, the total filtration amount per area of the hollow fiber membranes was measured.

(1) 9.6 g of Dulbecco PBS(-) powder "Nissui" commercially available from Nissui Pharmaceutical Co., Ltd. was dissolved in distilled water to make 1000 mL in total, which was to be used as PBS. This buffer was used to dilute IVIG manufactured by Seracare, and a 1-mol/L aqueous sodium hydroxide solution was used to adjust the pH at 7.3. Adjustment was made to make the IVIG concentration after both the dilution and the pH adjustment be 0.05 mass%.
(2) The test liquid was placed in a pressure tank and warmed at 25°C; the above-mentioned module with six hollow fiber membranes was used to perform dead-end filtration while the filtration pressure was controlled at 1.0 bar with a regulator; and the filtrate was sampled every 30 seconds.
(3) The total filtration amount per area of the hollow fiber membranes with respect to the filtration time, TPn [L/$m^2$], was calculated and recorded.

$$TPn=Wn/1.0/A/1000$$

Here, W represents the total amount [mL] of collected filtrate after a lapse of n minutes from the start of the filtration; 1.0 represents the density [g/cc] of the test liquid; and A represents the membrane area [$m^2$] of the module.
Table 2 shows the total filtration amount after a lapse of 15 minutes from the start of the filtration. Fig. 6 gives graphs showing the relationship between the filtration time and the total filtration volume per area, for the hollow fiber membranes according to Comparative Example 1 and Example 1.

[Table 2]

| | Properties of hollow fiber membranes | | | | | | | | | | | Evaluation | | | |
|---|---|---|---|---|---|---|---|---|---|---|---|---|---|---|---|
| | Dimensions | | | Structure | | | | | | | Cation-exchange volume | IgG recovery rate | IgG-aggregates trapping rate | Lysozyme adsorption volume | Total filtration amount |
| | Inner diameter | Outer diameter | Membrane thickness | Structure | Dense layer | Porosity | Permeation rate of 30-nm gold colloids | Permeation rate of 10-nm gold colloids | Trap layer for 20-nm gold colloids | | | | | | |
| | | | | | | | | | Thickness | Proportion | | | | | |
| | μm | μm | μm | - | - | % | % | % | μm | % | mmol/mL | % | % | mg/mL | L/m$^2$ |
| Ex. 1 | 265 | 365 | 50 | Asymmetric | Outer side | 92.4 | 0 | 100 | 21 | 42 | 0.4 | 97.4 | 100.0 | 67.0 | 54 |
| Ex. 2 | 265 | 365 | 50 | Asymmetric | Outer side | 93.7 | 0 | - | - | - | 0.4 | 95.0 | 100.0 | - | 22 |
| Ex. 3 | 265 | 365 | 50 | Asymmetric | Outer side | 92.6 | 0 | 100 | 17 | 34 | 0.4 | 91.2 | 100.0 | 42 | 51 |
| Comp. Ex. 1 | 240 | 350 | 55 | Asymmetric | Inner side | - | 0 | 0 | 0 | 0 | - | 18.9 | - | - | 11 |
| Comp. Ex. 2 | 240 | 350 | 55 | Asymmetric | Inner side | - | 0 | 0 | - | - | 0.3 | 1.4 | - | 83.2 | 10 |
| Comp. Ex. 3 | 205 | 341 | 68 | Asymmetric | Outer side | - | - | 9 | - | - | 0.0 | 94.0 | - | 0 | - |
| Comp. Ex. 4 | 265 | 365 | 50 | Asymmetric | Outer side | - | - | - | 0 | 0 | - | - | - | - | - |

From the results of Example 1 and Comparative Example 3 shown in Table 2, it is indicated that when the permeation rate of 10-nm gold colloids is 9% or more, the IgG recovery rate is as high as 90% or more.

It is also indicated that Comparative Example 3, which does not contain a negatively-charged polymer, does not have adsorption capability for positively-charged substances (a typical substance thereof is lysozyme).

Moreover, Fig. 6(a) indicates that in Comparative Example 1 where a dense layer is present on the first surface (the inner surface) side, the rate of increase of the total filtration amount decreases over time indicating clogging. On the other hand, as seen in Fig. 6(b), the rate of increase of the total filtration amount in Example 1 where a dense layer is present on the second surface (the outer surface) side is substantially constant, indicating no clogging. From these results as well as from the total filtration amount shown in Table 2, it is indicated that the porous membrane according to the present invention which has a dense layer on the second surface (the outer surface) side is capable of reducing degradation of filtration performance that can be caused by clogging.

Further, the comparison between Example 1 and Comparative Example 4 in Table 2, both of which use the same porous membrane but the positions of the first surface and the second surface are opposite, shows that in Comparative Example 4 where a dense layer is present on the first surface side, a trap layer for 20-nm gold colloids is not observed inside the membrane, indicating that gold colloids can be deposited near the first surface side. This also suggests that a structure having a dense layer on the second surface (the outer surface) side can reduce degradation of filtration performance that can be caused by clogging.

From the results shown in Examples 1 to 3, it is also indicated that a membrane that does not allow permeation of 30-nm gold colloids can prevent permeation of IgG aggregates.

From the results thus obtained, the following is indicated: when containing a negatively-charged polymer, the membrane has adsorptive removal performance for positively-charged substances; when having permeation performance for 10-nm gold colloids, the membrane has a high IgG recovery rate; when having a trap layer inside the membrane for trapping 20-nm gold colloids, the membrane is less susceptible to clogging; and when not allowing permeation of 30-nm gold colloids, the membrane is capable of preventing permeation of IgG aggregates.

REFERENCE SIGNS LIST

10a spinning dope, 10b internal liquid, 11 nozzle, 12, 13 in-liquid guide, 14, 15, 16 roller, 20 air gap, 21 coagulation liquid, 22 water bath, 23 take-up apparatus, 3 hollow fiber membrane, 4 larger component, 5 smaller component.

## Claims

**1.** A porous membrane comprising a negatively-charged polymer, wherein

the porous membrane is structurally non-uniform in a thickness direction, having a first surface that is less dense and a second surface that is more dense,
the porous membrane has a permeation rate for permeation of gold colloids having an average particle size of 10 nm from the first surface to the second surface of 5% or more,
the porous membrane does not allow permeation of gold colloids having an average particle size of 30 nm from the first surface to the second surface, and
a ratio of a thickness of a trap layer to a thickness of the porous membrane is 10% or more, where the trap layer is a layer that traps gold colloids having an average particle size of 20 nm at the time when the gold colloids having an average particle size of 20 nm are made to permeate across the porous membrane from the first surface toward the second surface.

**2.** The porous membrane according to claim 1, wherein the porous membrane further comprises a hydrophobic polymer and a hydrophilic polymer.

**3.** The porous membrane according to claim 2, wherein the hydrophobic polymer is at least one of polysulfone and polyethersulfone.

**4.** The porous membrane according to claim 2, wherein the hydrophilic polymer is at least one of polyvinylpyrrolidone and vinylpyrrolidone-vinyl acetate copolymer.

**5.** The porous membrane according to claim 1 or 2, wherein
the negatively-charged polymer contains a hydrophobic segment repeating unit represented by a formula (1) below and a hydrophilic segment repeating unit represented by a formula (2) below as copolymerization components:

[Chem. 1]

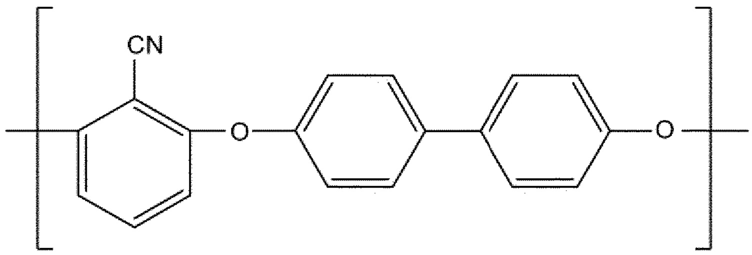

(1)

[Chem. 2]

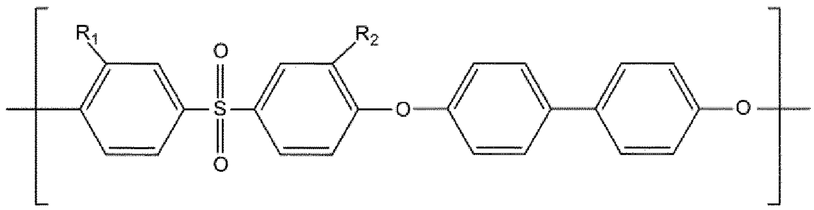

(2)

a compositional rate of the formula (1) (in mole) is from 0.50 to 0.65, a compositional rate of the formula (2) (in mole) is from 0.35 to 0.50, a sum of the compositional rate of the formula (1) (in mole) and the compositional rate of the formula (2) (in mole) is 1.00, each of $R_1$ and $R_2$ represents "$-SO_3M$", and M represents a metallic element.

**6.** The porous membrane according to claim 1 or 2, in a form of hollow fiber membrane that is less dense on an inner surface side and more dense on an outer surface side.

**7.** The porous membrane according to claim 1 or 2, for cation-exchange purification.

**8.** A purification method using the porous membrane according to claim 1.

FIG.1

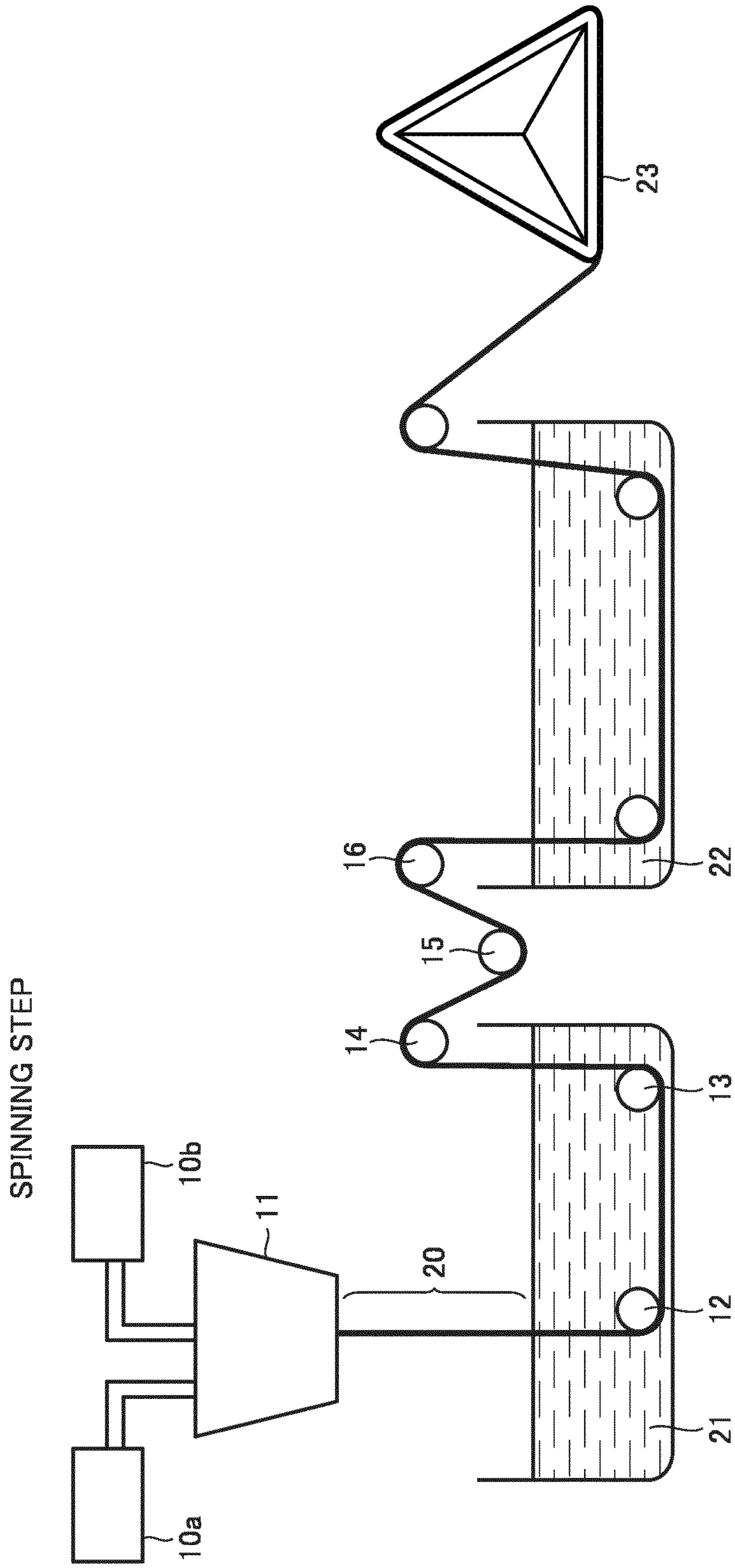

FIG.2

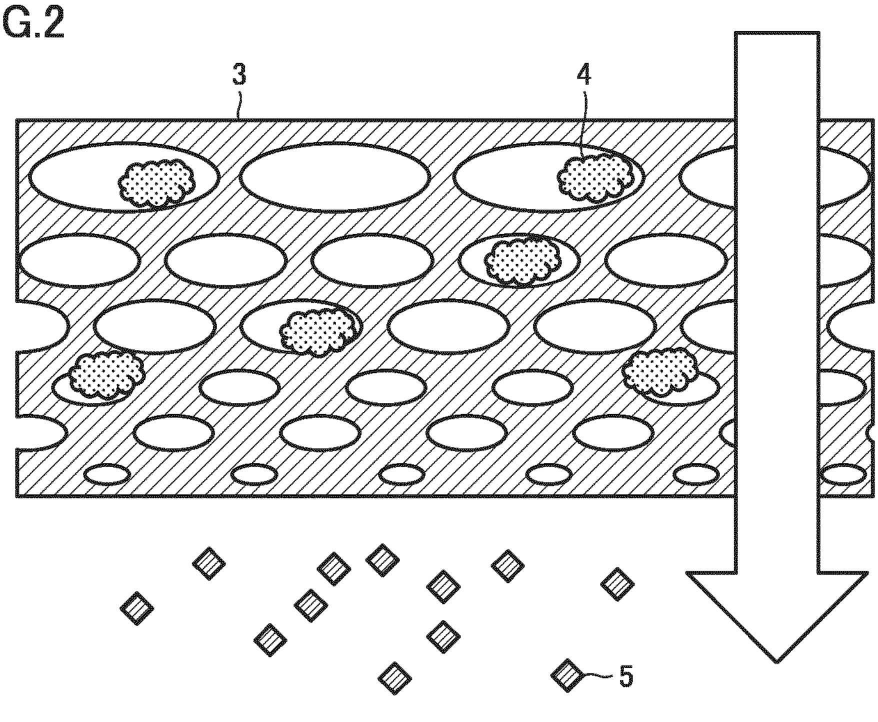

FIG.3

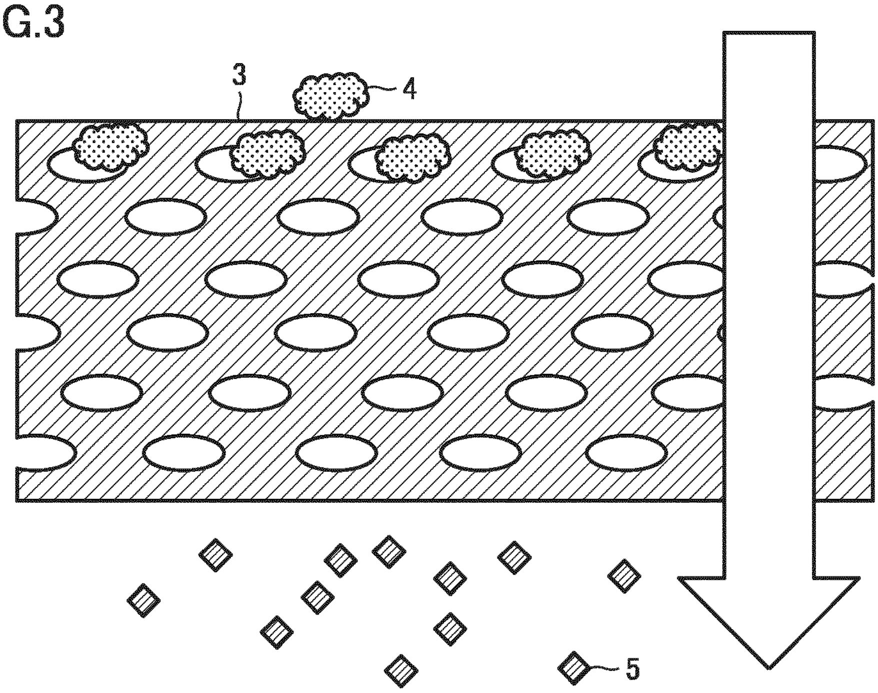

FIG.4

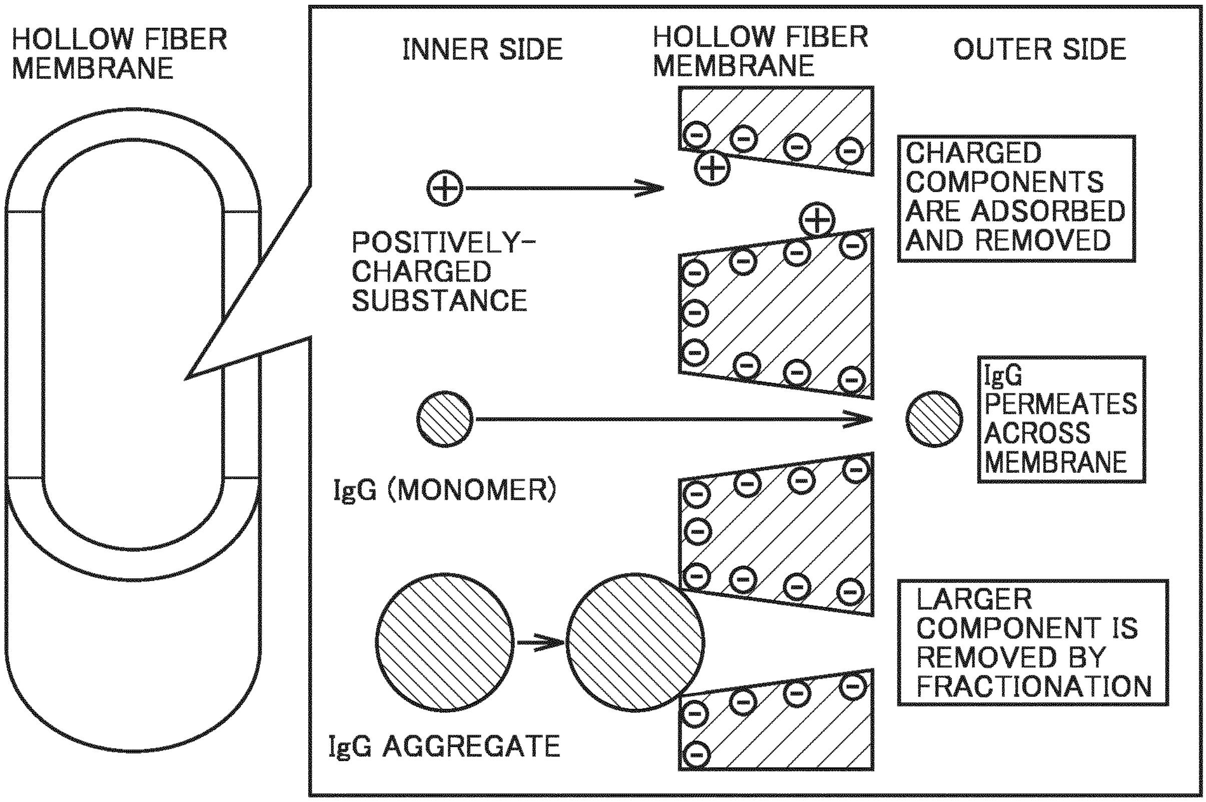
HOLLOW FIBER MEMBRANE
INNER SIDE
HOLLOW FIBER MEMBRANE
OUTER SIDE
CHARGED COMPONENTS ARE ADSORBED AND REMOVED
POSITIVELY-CHARGED SUBSTANCE
IgG PERMEATES ACROSS MEMBRANE
IgG (MONOMER)
LARGER COMPONENT IS REMOVED BY FRACTIONATION
IgG AGGREGATE

FIG.5

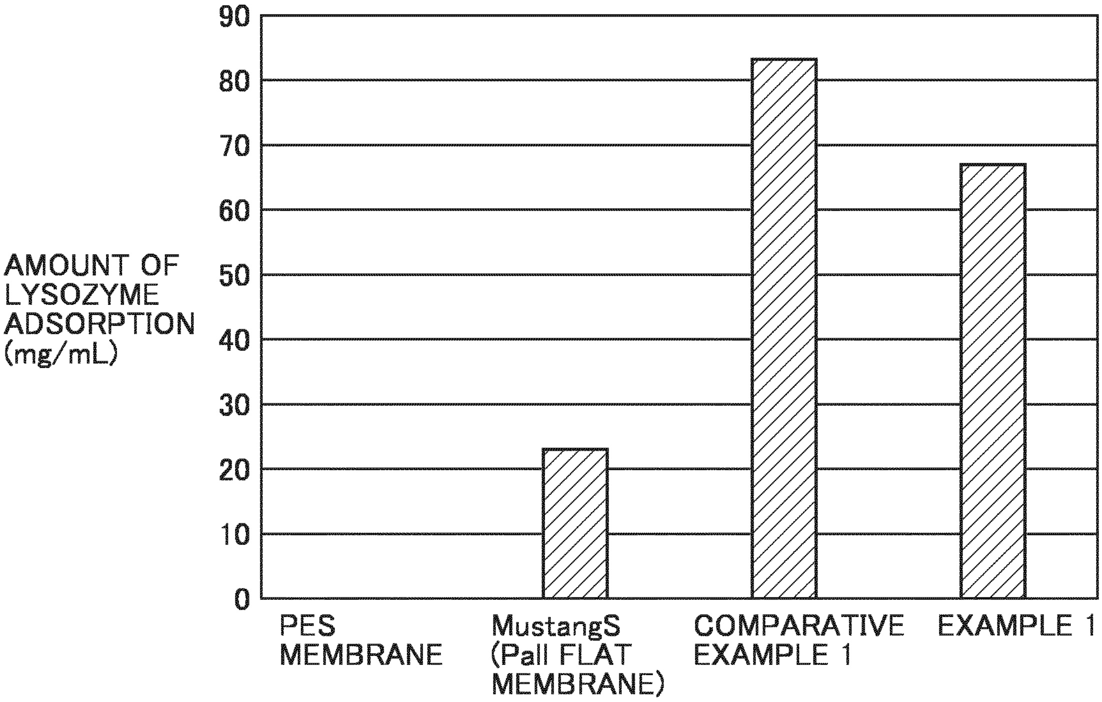
AMOUNT OF LYSOZYME ADSORPTION (mg/mL)
90
80
70
60
50
40
30
20
10
0
PES MEMBRANE
MustangS (Pall FLAT MEMBRANE)
COMPARATIVE EXAMPLE 1
EXAMPLE 1

FIG.6

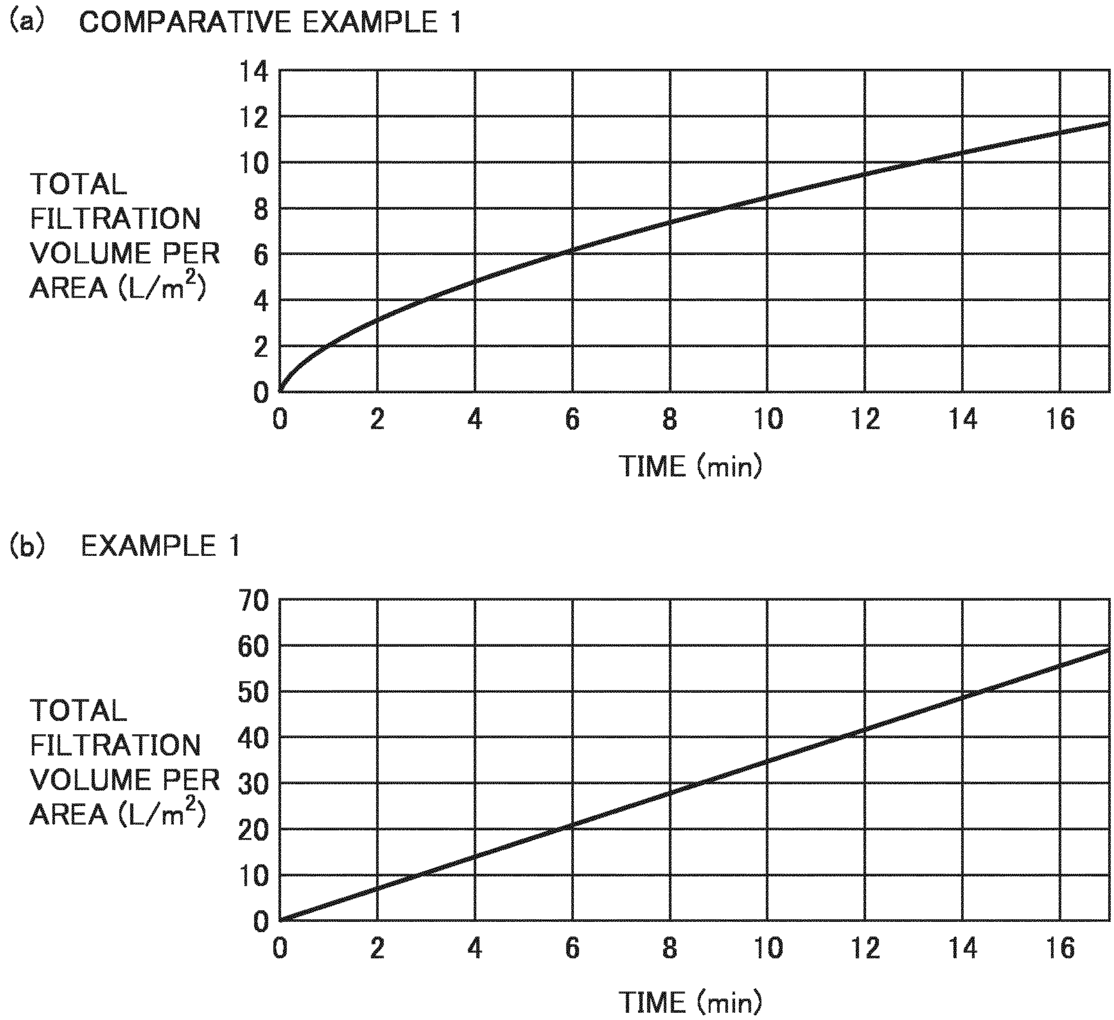
(a) COMPARATIVE EXAMPLE 1
TOTAL FILTRATION VOLUME PER AREA (L/m2)
14
12
10
8
6
4
2
0
0
2
4
6
8
10
12
14
16
TIME (min)
(b) EXAMPLE 1
TOTAL FILTRATION VOLUME PER AREA (L/m2)
70
60
50
40
30
20
10
0
0
2
4
6
8
10
12
14
16
TIME (min)

FIG.7

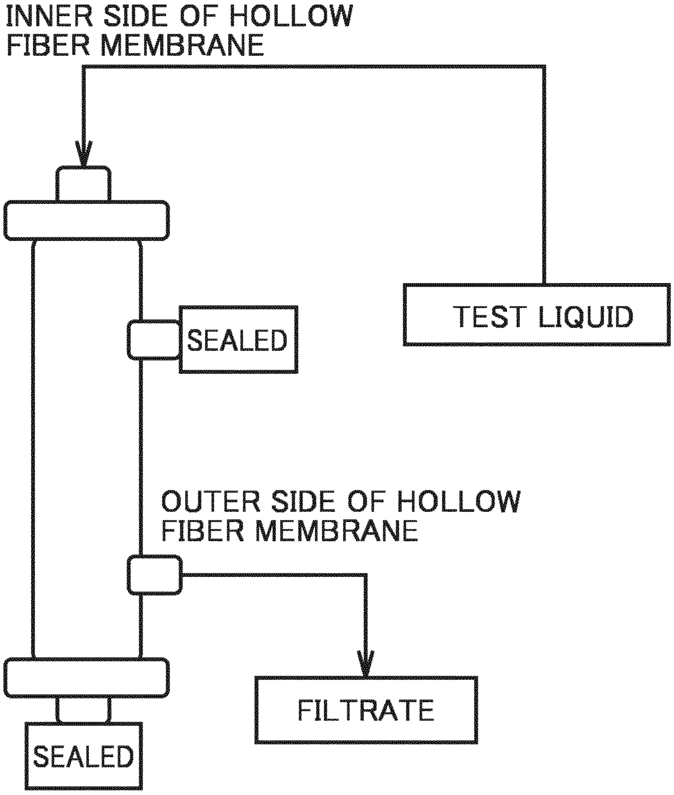
INNER SIDE OF HOLLOW
FIBER MEMBRANE
SEALED
TEST LIQUID
OUTER SIDE OF HOLLOW
FIBER MEMBRANE
FILTRATE
SEALED

FIG.8

EXAMPLE 1

(a) CROSS SECTION

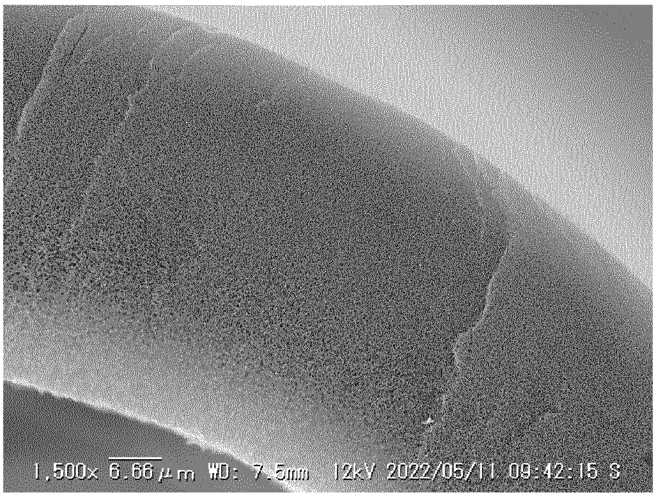


(b) ONE SURFACE (INNER SURFACE)

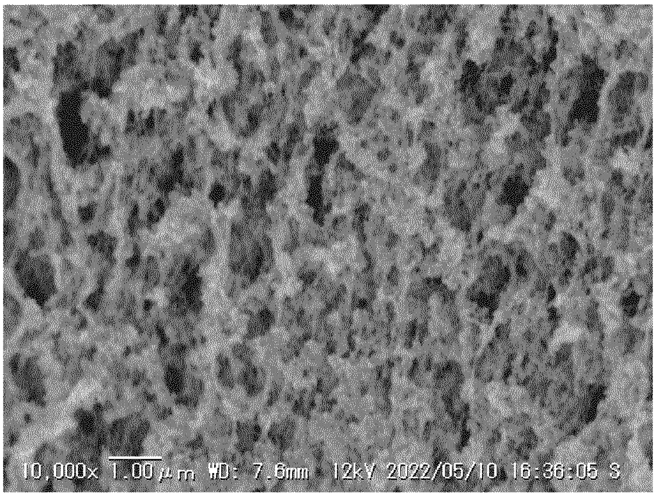


(c) THE OTHER SURFACE (OUTER SURFACE)

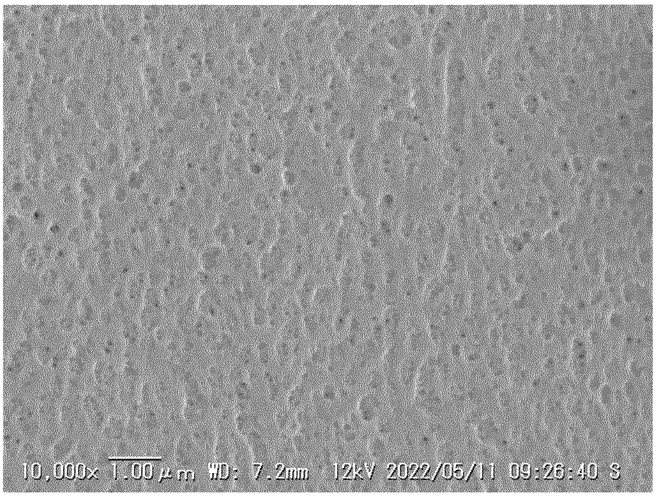

FIG.9

COMPARATIVE EXAMPLE 1

(a) CROSS SECTION

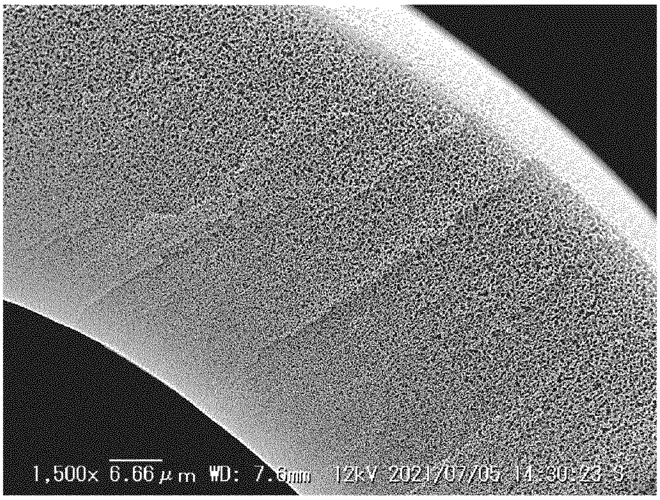


(b) ONE SURFACE (INNER SURFACE)

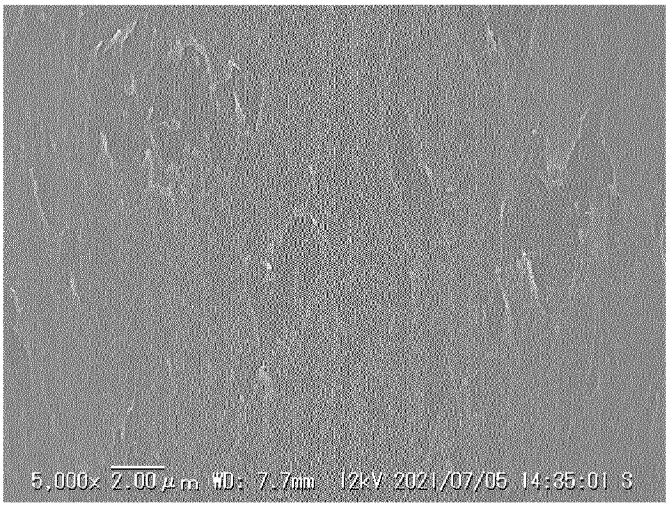


(c) THE OTHER SURFACE (OUTER SURFACE)

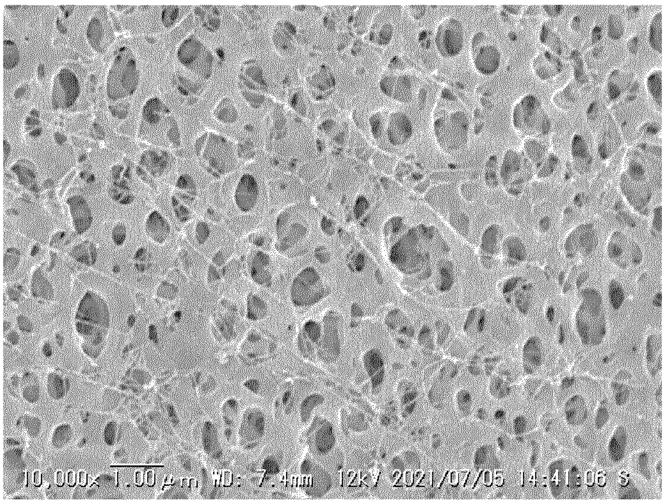

FIG.10

(a) COMPARATIVE EXAMPLE 1

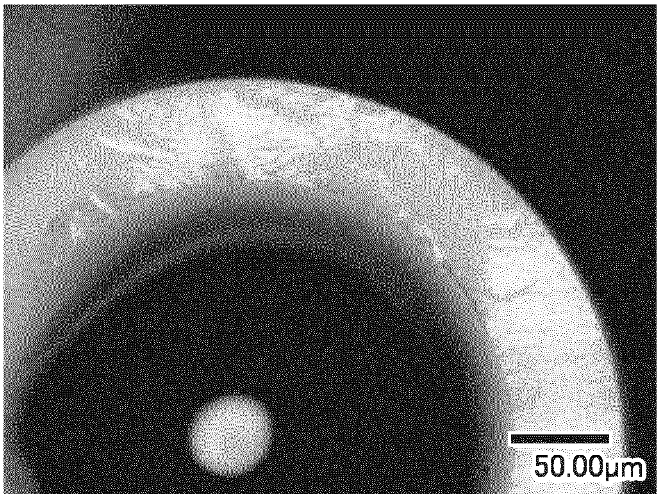


(b) EXAMPLE 1

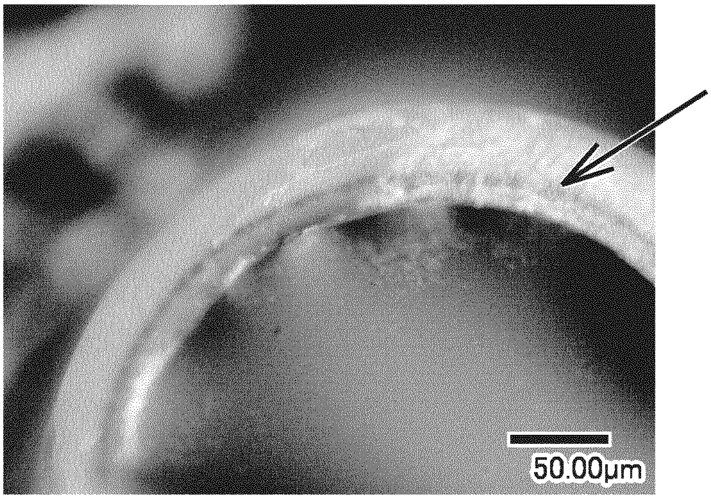


(c) EXAMPLE 1
(FILTRATION PERFORMED IN OPPOSITE DIRECTION)

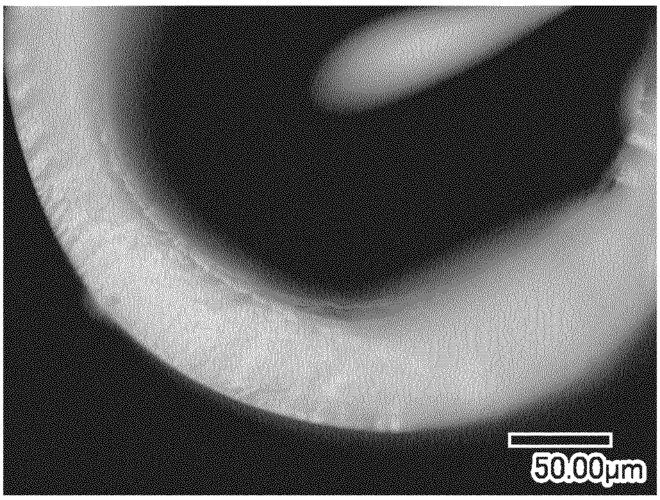

FIG.11

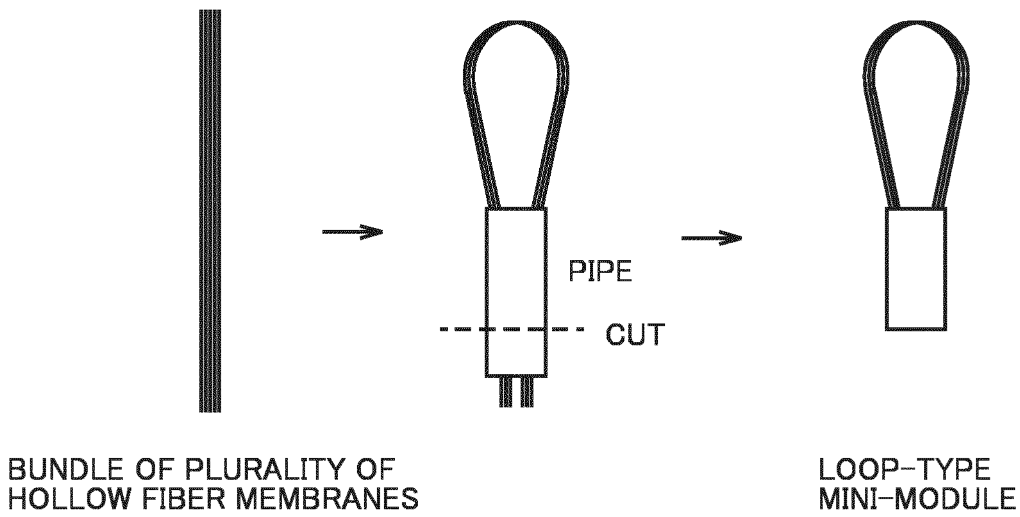
PIPE
CUT
BUNDLE OF PLURALITY OF HOLLOW FIBER MEMBRANES
LOOP-TYPE MINI-MODULE

FIG.12

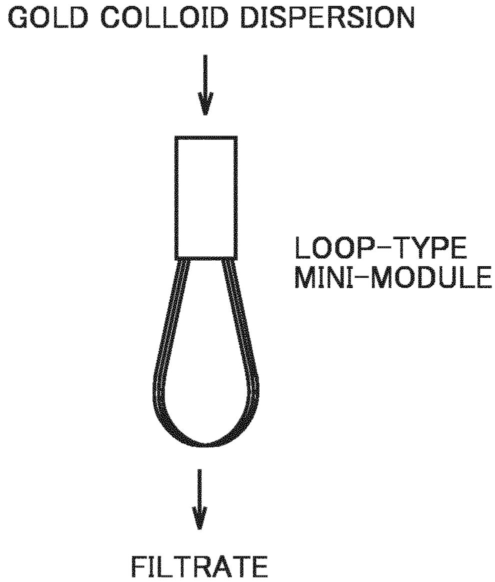

FIG.13

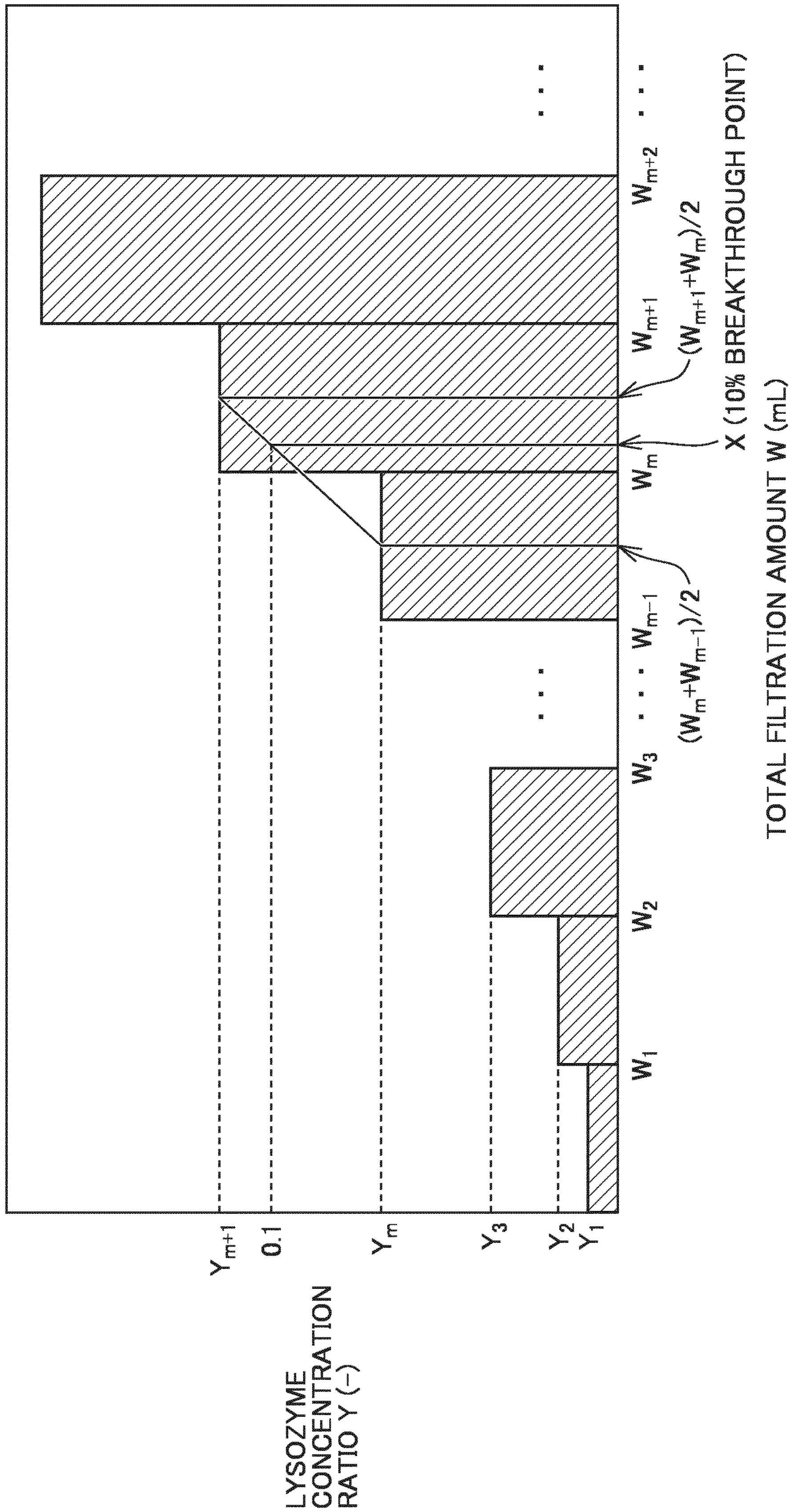
LYSOZYME CONCENTRATION RATIO Y (−)
$Y_{m+1}$
0.1
$Y_m$
$Y_3$
$Y_2$
$Y_1$
$W_1$
$W_2$
$W_3$
$W_{m-1}$
$W_m$
$W_{m+1}$
$W_{m+2}$
$(W_m+W_{m-1})/2$
X (10% BREAKTHROUGH POINT)
$(W_{m+1}+W_m)/2$
TOTAL FILTRATION AMOUNT W (mL)

**INTERNATIONAL SEARCH REPORT**

International application No.
**PCT/JP2023/029694**

**A. CLASSIFICATION OF SUBJECT MATTER**

***B01D 69/02***(2006.01)i; ***B01D 69/00***(2006.01)i; ***B01D 69/08***(2006.01)i; ***B01D 71/40***(2006.01)i; ***B01D 71/44***(2006.01)i; ***B01D 71/68***(2006.01)i; ***B01D 71/80***(2006.01)i
FI: B01D69/02; B01D69/00; B01D69/08; B01D71/40; B01D71/44; B01D71/68; B01D71/80

According to International Patent Classification (IPC) or to both national classification and IPC

**B. FIELDS SEARCHED**

Minimum documentation searched (classification system followed by classification symbols)

B01D53/22, 61/00-71/82, C02F1/44, B01J39/04-07, 47/12-133, C08J5/22, C07K16/00-46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-136305 A (TOYOBO CO LTD) 14 July 2011 (2011-07-14) paragraphs [0025]-[0034], fig. 3 | 1-4, 6, 8<br>1-8 |
| Y | JP 2014-97465 A (TOYOBO CO LTD) 29 May 2014 (2014-05-29) paragraphs [0061]-[0121] | 1-8 |
| X<br>Y | WO 2015/141653 A1 (TOYOBO CO LTD) 24 September 2015 (2015-09-24) paragraphs [0020]-[0083], fig. 2-4 | 1, 5-8<br>1-8 |
| X<br>Y | JP 2018-58040 A (TOYOBO CO LTD) 12 April 2018 (2018-04-12) paragraphs [0020]-[0062] | 1, 5-8<br>1-8 |
| A | JP 2006-304825 A (TOYOBO CO LTD) 09 November 2006 (2006-11-09) paragraph [0078] | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/029694

C. DOCUMENTS CONSIDERED TO BE RELEVANT

| Category* | Citation of document, with indication, where appropriate, of the relevant passages | Relevant to claim No. |
|---|---|---|
| A | WO 2016/113964 A1 (ASAHI KASEI MEDICAL CO., LTD.) 21 July 2016 (2016-07-21) paragraph [0024] | 1-8 |

Form PCT/ISA/210 (second sheet) (January 2015)

**INTERNATIONAL SEARCH REPORT**
**Information on patent family members**

International application No.
**PCT/JP2023/029694**

| Patent document cited in search report | Publication date (day/month/year) | Patent family member(s) | Publication date (day/month/year) |
|---|---|---|---|
| JP 2011-136305 A | 14 July 2011 | (Family: none) | |
| JP 2014-97465 A | 29 May 2014 | US 2015/0232506 A1<br>paragraphs [0078]-[0156]<br>WO 2014/077095 A1<br>EP 2896451 A1 | |
| WO 2015/141653 A1 | 24 September 2015 | (Family: none) | |
| JP 2018-58040 A | 12 April 2018 | WO 2018/066631 A1 | |
| JP 2006-304825 A | 09 November 2006 | (Family: none) | |
| WO 2016/113964 A1 | 21 July 2016 | US 2017/0361285 A1<br>paragraph [0040]<br>US 2017/0029462 A1<br>WO 2015/156403 A1<br>EP 3246085 A1<br>EP 3130392 A1<br>KR 10-2016-0087891 A<br>CN 105980037 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3651682 B